# EUROPÄISCHE PATENTSCHRIFT

(11) **EP 4 022 413 B1**
(45) Veröffentlichungstag und Bekanntmachung des Hinweises auf die Patenterteilung: **25.12.2024**
(21) Anmeldenummer: 20753721.8
(22) Anmeldetag: 06.08.2020
(51) Int. Cl.: G06F 1/16, H04M 1/725, H04M 1/04, H04M 1/72412

(54) **DOCKINGSTATION FÜR ANWENDERGERÄT UND ENTSPRECHENDES VERFAHREN ZUM ANDOCKEN**
DOCKING STATION FOR USER DEVICE AND CORRESPONDING DOCKING PROCEDURE
STATION D'ACCUEIL POUR APPAREIL UTILISATEUR ET PROCÉDURE D'ACCUEIL CORRESPONDANTE

(30) Priorität: 27.08.2019 DE 102019212841
(43) Veröffentlichungstag der Anmeldung: 06.07.2022
(73) Patentinhaber: BSH Hausgeräte GmbH, 81739 München (DE)
(72) Erfinder: ALVAREZ-FERNANDEZ, Rodolfo, 81541 München (DE); ELLWITZ, Tom, 74549 Wolpertshausen (DE); ETZBACH, Andrea, 80634 München (DE); FRATTESI, Stefano, 81541 München (DE); MOSER, Markus, 85658 Egmating (DE); SCHMIETENDORF, Wiebke, 81737 München (DE); WONG, Desmond, 83278 Traunstein (DE)
(86) Internationale Anmeldenummer: PCT/EP2020/072089
(87) Internationale Veröffentlichungsnummer: WO 2021/037512

(56) Entgegenhaltungen:
- WO-A2-2019/164735
- US-A1- 2011 098 087
- US-A1- 2014 330 998

## Beschreibung

Die Erfindung betrifft eine Dockingstation, auch als Andockstation bezeichnet, für ein Anwendergerät, insbesondere für ein Smartphone und/oder für einen Tablet PC.

Viele Menschen benutzen Smartphones oder Tablet PC (d.h. Anwendergeräte) auch im Küchenkontext, zum Beispiel für Rezepte oder zum Steuern eines Hausgeräts. Dabei kann es zu Problemen bei dem Bedienen eines Anwendergeräts mit nassen oder dreckigen Händen kommen, oder es entsteht ein Mehraufwand für wiederholtes Händewaschen. Des Weiteren kann es vorkommen, dass das Anwendergerät (bei längerer Nicht-Bedienung) in den Stand-by Modus übergeht und für eine erneute Nutzung aufgeweckt werden muss.

US 2014/330998 A1 beschreibt ein Verfahren zur Steuerung eines Docking-Prozesses. US 2011/098087 A1 beschreibt eine Dockingstation für einen mobilen Computer. WO 2019/164735 A2 beschreibt eine Desktop-Vorrichtung für einen mobilen Computer und wurde am 29.08.2019 veröffentlicht.

Das vorliegende Dokument befasst sich mit der technischen Aufgabe, den Komfort für einen Nutzer bei der Verwendung von Anwendergeräten, insbesondere innerhalb eines Haushalts, zu erhöhen.

Die Aufgabe wird durch die Gegenstände der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Dockingstation bzw. Andockstation für ein elektronisches Anwendergerät (insbesondere für einen Tablet PC und/oder für ein Smartphone) beschrieben. Die Dockingstation kann so ausgestaltet sein, dass sie in einem Grundzustand, in dem noch kein elektronisches Anwendergerät angedockt wurde, die Funktion eines konventionellen Smart Speakers, wie z.B. eines Amazon Alexa Echo, erfüllen kann. Die Dockingstation kann ausgebildet sein, eine Vielzahl von unterschiedlichen Typen und/oder Modellen von Anwendergeräten andocken zu können. Die unterschiedlichen Typen und/oder Modelle von Anwendergeräten können dabei unterschiedliche Betriebssysteme (z.B. AndroidOS und/oder iOS), unterschiedliche drahtgebundene Daten- und/oder Ladeschnittstellen (z.B. USB C, USB Micro, Apple Schnittstelle, etc.) und/oder unterschiedliche räumliche Abmessungen (z.B. Dicke zwischen 2mm und 2cm, Breite zwischen 5cm und 30cm und/oder Länge zwischen 5cm und 30cm) aufweisen. Es kann somit eine generische Dockingstation bereitgestellt werden.

Die Dockingstation umfasst ein Gehäuse mit einer Halterung, die ausgebildet ist, unterschiedliche Typen und/oder Modell von Anwendergeräten an oder in der Dockingstation zu halten. Das Gehäuse kann wasserdicht oder spritzwassergeschützt ausgestaltet sein. Ein Anwendergerät kann dabei derart von der Halterung gehalten werden, dass die Anzeigeeinheit (insbesondere der Bildschirm) des Anwendergeräts für einen Nutzer von der Seite oder von Oben (und bevorzugt von allen Richtungen) gesehen werden kann. Die Halterung kann ausgebildet sein, Anwendergeräte mit den o.g. Abmessungen zu halten. Die Halterung kann z.B. als Mulde in dem Gehäuse der Dockingstation ausgebildet sein. Des Weiteren kann die Halterung ausgebildet sein, ein Anwendergerät mit einem bestimmten Winkel zum Boden und/oder zur Horizontalen (z.B. in einem bestimmten Winkelbereich, etwa zwischen 40° und 90°) zu halten.

Die Halterung kann derart ausgebildet sein, dass die Halterung durch das Gehäuse verdeckt wird, wenn sich kein Anwendergerät in der Halterung befindet. Alternativ oder ergänzend kann die Halterung ausgebildet sein, (ggf. nur dann) auszuklappen, wenn ein Anwendergerät in die Halterung gestellt wird. So kann auch bei einem alleinigen Betrieb der Dockingstation (ohne Anwendergerät) ein zuverlässiger Schutz der Dockingstation ermöglicht werden.

Die Dockingstation umfasst einen Belegungssensor der eingerichtet ist, Belegungs-Sensordaten zu erfassen, die anzeigen, ob sich ein Anwendergerät in der Halterung befindet oder nicht. Der Belegungssensor kann z.B. eine Lichtschranke, einen optischen Sensor, einen kapazitiven Sensor, einen mechanischen Schalter, einen Gewichtssensor, einen Näherungssensor, einen NFC Transceiver, etc. umfassen.

Des Weiteren umfasst die Dockingstation eine Kommunikationseinheit, die für eine drahtlose Datenkommunikation ausgebildet ist. Die Kommunikationseinheit kann z.B. ausgebildet sein, eine Bluetooth, Bluetooth Low Energy (BLE) und/oder eine WLAN (Wireless Local Area Network) Kommunikation zu ermöglichen.

Die Dockingstation umfasst ferner ein Steuermodul (z.B. mit ein oder mehreren Mikroprozessoren), das eingerichtet ist, auf Basis der Belegungs-Sensordaten zu bestimmen, dass sich ein Anwendergerät in der Halterung befindet. Anhand des Belegungssensor kann somit überprüft werden, ob ein mechanisches Andocken eines Anwendergeräts an der Dockingstation vorliegt. Dabei kann ein mechanisches Andocken auf das Hineinstellen in die Halterung beschränkt sein (ohne, dass dabei eine Datenkommunikation zwischen dem Anwendergerät und der Dockingstation ermöglicht wird, und/oder ohne, dass dabei eine Steckverbindung zwischen der Dockingstation und dem Anwendergerät gebildet wird).

Des Weiteren kann das Steuermodul eingerichtet sein, über die Kommunikationseinheit eine drahtlose Kommunikationsverbindung (insbesondere eine Bluetooth, BLE und/oder WLAN Verbindung) mit dem Anwendergerät aufzubauen. Über die Kommunikationseinheit kann somit ein funktionales Andocken des Anwendergeräts an die Dockingstation (durch das u.a. eine Datenkommunikation zwischen dem Anwendergerät und der Dockingstation ermöglicht wird) erfolgen. Unter einem solchen Andocken kann insbesondere verstanden werden, dass das Anwendergerät mit der Dockingstation funktional gekoppelt wird, so dass das Anwendergerät und die Dockingstation miteinander interagieren können.

Die Dockingstation kann somit ausgebildet sein, in komfortabler und effizienter Weise ein Andocken von (ggf. beliebigen) Anwendergeräten an die Dockingstation zu ermöglichen. So können in effizienter Weise der Funktionsumfang des Anwendergeräts und/oder der Dockingstation erweitert werden. Insbesondere kann das mechanische und/oder funktionale Andocken derart erfolgen, dass infolge des Andockens ein einheitliches und funktional durchgängiges Gesamtgerät bereitgestellt wird, das sowohl die Funktionen des Anwendergeräts als auch die Funktionen der Dockingstation umfasst. Insbesondere kann das Steuermodul der Dockingstation eingerichtet sein, zu veranlassen, dass der Funktionsumfang der Dockingstation um zumindest eine Funktion des Anwendergeräts erweitert wird. Beispielsweise kann das Steuermodul der Dockingstation eingerichtet sein, die Anzeigeeinheit des Anwendergeräts anzusteuern, um bildliche Information auf der Anzeigeeinheit auszugeben (und um dadurch den Funktionsumfang der Dockingstation um die Funktion "Bildschirm" zu erweitern). Auf diese Weise kann unter Umständen die Funktionalität eines Amazon Alexa Echo Show bereitgestellt werden.

Die Dockingstation kann insbesondere dafür eingerichtet sein, für andere Geräte, die z.B. ausschließlich einen Bluetooth-Funkchip besitzen, als Gateway ins Internet zu fungieren. Zu denken ist beispielsweise an einen Stabmixer, der aus Kostengründen nur mit Bluetooth ausgerüstet ist. Der Stabmixer kann sich mittels Bluetooth mit der Dockingstation verbinden und seine Daten über die Dockingstation an einen Server im Internet senden.

Alternativ oder ergänzend kann das Steuermodul ausgebildet sein, über die drahtlose Kommunikationsverbindung zu veranlassen, dass auf dem Anwendergerät eine Software-Applikation ausgeführt wird. Beispielsweise kann automatisch eine bestimmte Internetseite geöffnet werden (z.B. um auf eine Rezeptdatenbank zuzugreifen) und/oder es kann bewirkt werden, dass eine Applikation ihren Zustand wechselt (z.B. in den Vordergrund gebracht wird und/oder einen passenden Inhalt anzeigt). So kann der Komfort für einen Nutzer weiter erhöht werden. Die Applikation kann z.B. auf dem Anwendergerät bereits im Hintergrund gelaufen sein (z.B. um auf Beacons der Dockingstation zu horchen und um diese ggf. auszuwerten). Die Applikation kann dann in den Fokus gebracht werden. Alternativ oder ergänzend kann die Applikation ggf. einen Status ändern, z.B. um bestimmte Daten anzuzeigen und/oder um in einen bestimmten Kommunikationsmodus (z.B. für einen visuell unterstützen Sprachassistenten) zu gehen. Alternativ oder ergänzend kann ein Anwendermodus geändert werden, bei dem die Applikation die ein oder mehreren vorher aktiven Applikationen auf einem Teil des Bildschirms überlagert (z.B. ein sogenannter picture-in-picture mode).

Die Dockingstation kann zumindest einen Gestensensor umfassen, der eingerichtet ist, Gestendaten in Bezug auf eine von einem Nutzer durchgeführten, berührungslosen Geste zu erfassen. Alternativ oder zusätzlich kann die Dockingstation und/oder die Software-Applikation dazu eingerichtet sein, mit einem externen Gestensensor gekoppelt zu werden, der insbesondere wiederum mit einem Projektor verbunden sein kann und mit diesem vorzugsweise hinsichtlich des Projektionsbereichs und eines Gestenaufnahmebereichs abgestimmt ist. Das Steuermodul der Dockingstation kann eingerichtet sein, die Gestendaten ggf. auszuwerten und/oder über die drahtlose Kommunikationsverbindung an das Anwendergerät zu senden, um eine Gesten-basierte Steuerung des Anwendergeräts, insbesondere der Software-Applikation des Anwendergeräts, zu ermöglichen. So kann in effizienter Weise der Funktionsumfang eines Anwendergeräts erweitert werden. Beispielsweise kann es einem Nutzer so ermöglicht werden, beim Kochen durch eine (Rezept-) Datenbank zu scrollen, ohne sich die Hände waschen zu müssen. Somit kann der Komfort für einen Nutzer erhöht werden.

In einigen Ausführungsformen sind die Dockingstation und/oder die Software-Applikation des Anwendergeräts dafür eingerichtet, mit einem Projektor gekoppelt zu werden. Dieser Projektor kann die Anzeige der Anzeigeeinheit des Anwendergeräts doppeln oder ersetzen. Auf diese Weise zeigt der Projektor die bildliche Information der Anzeigeeinheit an. Besondere Vorteile ergeben sich, wenn der Projektor die bildliche Information auf die Arbeitsplatte in der Küche projiziert und der Nutzer über den Gestensensor mit der Projektion interagieren kann. Dadurch wird die Anzeigeeinheit des Anwendergeräts nicht durch dreckige Finger beim Kochen verschmutzt und die Applikation ist dennoch durch Gesten steuerbar.

Die Dockingstation umfasst zumindest ein Mikrofon (insbesondere ein Mikrofon-Array) , das eingerichtet ist, Audiodaten in Bezug auf eine von einem Nutzer gesprochene Anweisung zu erfassen. Zusätzlich umfasst die Dockingstation zumindest einen Lautsprecher, so dass die Dockingstation auch ohne Anwendergerät vorzugsweise den Funktionsumfang eines Smart Speakers, wie eines Amazon Alexa Echo, bereitstellen kann. Das Steuermodul kann eingerichtet sein, die Audiodaten, oder davon abgeleitete Steuerdaten, über die drahtlose Kommunikationsverbindung an das Anwendergerät zu senden, um eine Sprach-basierte Steuerung des Anwendergeräts, insbesondere der Software-Applikation des Anwendergeräts, zu ermöglichen. Alternativ oder ergänzend kann das Steuermodul eingerichtet sein, eine bildliche Ausgabe auf einer Anzeigeeinheit des Anwendergeräts in Abhängigkeit von den Audiodaten zu steuern, insbesondere um in Kombination mit dem Anwendergerät einen Sprachassistenten mit Bildausgabe bereitzustellen. Die bildliche Ausgabe kann z.B. von einem Server und/oder aus einer Cloud bezogen und dann auf der Anzeigeeinheit ausgegeben werden. So kann in effizienter und zuverlässiger Weise eine Dockingstation mit Sprachassistent bzw. eine Dockingstation, die in einem Grundzustand die Funktion eines konventionellen Smart Speakers, wie z.B. eines Amazon Alexa Echo, erfüllt, um eine zusätzliche Bildfunktion erweitert werden. Auf diese Weise kann möglicherweise die Funktion eines Amazon Alexa Echo Show erreicht werden, wobei der modulare Aufbau von Dockingstation und Anwendergerät es dem Nutzer ermöglicht, das Anwendergerät unabhängig von der Dockingstation auszutauschen, um beispielsweise eine höhere Bildschirmgröße oder eine größere Rechenleistung bereitzustellen.

Zusätzlich sei bemerkt, dass der aktuelle Amazon Alexa Echo Show als Betriebssystem Fire OS verwendet und keine Verbindung zum Google-App-Store oder Apple-App-Store aufweist. Die dort angebotenen Apps wären auf dem Amazon Alexa Echo Show derzeit auch nicht ausführbar. Durch die Kopplung einer Dockingstation, die bereits in einem Grundzustand, in dem noch kein elektronisches Anwendergerät angedockt wurde, die Funktion eines konventionellen Smart Speakers, wie z.B. eines Amazon Alexa Echo, erfüllt, mit einem Anwendergerät, auf dem iOS oder Android installiert ist, kann die Dockingstation möglicherweise Zugriff auf die gesamte iOS-Welt und/oder Android-Welt inklusive der damit zusammenhängenden Apps-Stores erhalten. Es kann sich also der Vorteil ergeben, dass eine Kombination aus der hier vorgeschlagenen Dockingstation mit einem Anwendergerät einen Funktionsumfang bereitstellen kann, der weit über den Funktionsumfang eines derzeitigen Amazon Alexa Echo Show hinaus geht.

Die Dockingstation umfasst zumindest einen Lautsprecher. Des Weiteren kann die Dockingstation eingerichtet sein, über den Lautsprecher ein Audiosignal auszugeben. Beispielsweise kann die Dockingstation ausgebildet sein, Musik abzuspielen. Alternativ oder ergänzend kann die Dockingstation als Sprachassistent ausgebildet sein. Alternativ oder ergänzend kann die Dockingstation mit dem Anwendergerät manuell über Bluetooth verbunden sein, und z.B. als Bluetooth-Lautsprecher für das Anwendergerät dienen.

Das Steuermodul kann eingerichtet sein, auf Basis der Belegungs-Sensordaten zu bestimmen, dass das Anwendergerät aus der Halterung herausgenommen wird oder wurde (und somit das mechanische Andocken beendet wurde). Des Weiteren kann das Steuermodul eingerichtet sein, in Reaktion darauf, die Kommunikationseinheit zu veranlassen, die drahtlose Kommunikationsverbindung mit dem Anwendergerät zu unterbrechen (und somit auch das funktionale Andocken zu beenden). So kann ein zuverlässiges Beenden einer Andocksituation bewirkt werden.

Das Steuermodul ist eingerichtet, die Kommunikationseinheit zu veranlassen, zumindest ein Beacon (d.h. ein Radiosignal) auszusenden, und in Reaktion darauf, ein oder mehrere Antwortsignale von ein oder mehreren Anwendergeräten in einem Umfeld der Dockingstation zu empfangen. Beispielsweise kann ein BLE Beacon ausgesendet werden. Des Weiteren ist das Steuermodul eingerichtet, auf Basis der ein oder mehreren Antwortsignale zu bestimmen, welches der ein oder mehreren Anwendergeräte sich in der Halterung der Dockingstation befindet. Es kann dann selektiv mit dem identifizierten Anwendergerät eine drahtlose Kommunikationsverbindung aufgebaut werden. Dieses identifizierte Anwendergerät kann im Folgenden insbesondere als "bestimmtes Anwendergerät" bezeichnet werden. Beispielsweise kann von dem Steuermodul ermittelt worden sein, dass sich ein erstes Anwendergerät von den ein oder mehreren Anwendergeräten in der Halterung der Dockingstation befindet. Es kann dann bewirkt werden, dass selektiv und/oder ausschließlich mit dem ersten Anwendergerät und insbesondere mit keinem anderen der ein oder mehreren Anwendergerät eine drahtlose Kommunikationsverbindung aufgebaut wird, um (nur) das erste Anwendergerät funktional an der Dockingstation anzudocken. Durch die Verwendung eines Beaconing-Prozesses kann in besonders zuverlässiger Weise ein funktionales Andocken eines Anwendergeräts erfolgen, das bereits mechanisch mit der Dockingstation angedockt ist bzw. auf der Dockingstation steht.

Das Steuermodul kann eingerichtet sein, auf Basis der ein oder mehreren Antwortsignale entsprechende ein oder mehrere Signalstärkewerte, insbesondere ein oder mehrere Received Signal Strength Indicator, kurz RSSI, Werte, des Beacons an den ein oder mehreren Anwendergeräten zu ermitteln. Mit anderen Worten kann für jedes der ein oder mehreren Anwendergeräte die Signalstärke des Beacons an dem jeweiligen Anwendergerät erfasst werden. Es kann dann in besonders zuverlässiger Weise auf Basis der ein oder mehreren Signalstärkewerte bestimmt werden, welches der ein oder mehreren Anwendergeräte sich in der Halterung der Dockingstation befindet. Insbesondere kann dabei das Anwendergerät mit dem (relativ) höchsten Signalstärkewert als das identifizierte bzw. bestimmte Anwendergerät ausgewählt werden.

In einem bevorzugten Beispiel kann das Steuermodul eingerichtet sein, die ein oder mehreren Signalstärkewerte jeweils mit einem Signalstärke-Schwellenwert zu vergleichen. Der Signalstärke-Schwellenwert kann dabei im Rahmen eines Kalibrierungsvorgangs ermittelt und (ggf. auf einem Speicher der Dockingstation und/oder auf einem Speicher eines Anwendergeräts) gespeichert worden sein. Das Steuermodul kann dann ggf. derart ausgebildet sein, dass nur dann bestimmt wird, dass sich ein bestimmtes Anwendergerät in der Halterung der Dockingstation befindet, wenn der Signalstärkewert für das bestimmte Anwendergerät gleich wie oder größer als der Signalstärke-Schwellenwert ist. Der Signalstärke-Schwellenwert kann somit einen mindestens erforderlichen Signalstärkewert anzeigen, der für ein funktionales Andocken erforderlich ist. So kann ein besonders zuverlässiges funktionales Andocken bewirkt werden.

Das Steuermodul kann eingerichtet sein, in einer Kalibrierungsphase einen Nutzer zu veranlassen, ein bestimmtes Anwendergerät, das zukünftig an die Dockingstation angedockt werden soll, in die Halterung zu stellen. Des Weiteren kann die Kommunikationseinheit veranlasst werden, zumindest ein Beacon auszusenden, und in Reaktion darauf, ein Antwortsignal von dem bestimmten Anwendergerät zu empfangen. Des Weiteren kann das Steuermodul eingerichtet sein, auf Basis des in dem Antwortsignal enthaltenen Signalstärkewertes des Beacons an dem bestimmten Anwendergerät einen Signalstärke-Schwellenwert zu ermitteln. Der Signalstärke-Schwellenwert kann dann für einen zukünftigen Andockvorgang eines Anwendergeräts an der Dockingstation verwendet werden. Durch das Durchführen einer Kalibrierphase können die Güte und die Zuverlässigkeit von Andockvorgängen erhöht werden.

Insbesondere kann das Steuermodul eingerichtet sein, in der Kalibrierungsphase den Nutzer zu veranlassen, das bestimmte Anwendergerät sequentiell in einer Mehrzahl von unterschiedlichen Weisen, insbesondere in einer Mehrzahl von unterschiedlichen Positionen und/oder Orientierungen, in die Halterung zu stellen. Es kann dann für die Mehrzahl von unterschiedlichen Weisen eine entsprechende Mehrzahl von Signalstärkewerten ermittelt werden. Der Signalstärke-Schwellenwert kann dann in besonders präziser Weise auf Basis der Mehrzahl von Signalstärkewerten, insbesondere auf Basis eines Mittelwerts der Mehrzahl von Signalstärkewerten, ermittelt werden.

Das Steuermodul kann eingerichtet sein, auf Basis des Antwortsignals eines bestimmten Anwendergeräts Lageinformation in Bezug auf die Lage, Position, Ausrichtung und/oder Orientierung des bestimmten Anwendergeräts zu bestimmen. Die Lageinformation kann dabei anzeigen und/oder umfassen: Positionsdaten, insbesondere GPS Koordinaten, eines Positionssensors des bestimmten Anwendergeräts, und/oder Orientierungsdaten eines Gyro- und/oder Beschleunigungssensors des bestimmten Anwendergeräts. Es kann dann (auch) auf Basis der Lageinformation bestimmt werden, ob sich das bestimmte Anwendergerät in der Halterung befindet oder nicht. Durch die Berücksichtigung von (zusätzlicher) Lageinformation kann die Zuverlässigkeit eines (funktionalen) Andockvorgangs weiter erhöht werden. Dabei kann ausgenutzt werden, dass die Geometrie der Dockingstation, insbesondere die Form und Ausrichtung der Halterung, im Vorfeld bekannt ist. Insbesondere ist bekannt, in welchem Winkel zur Erdgravitation ein Anwendergerät stehen wird, wenn es sich in der Dockingstation befindet und von der Halterung gehalten wird. Da handelsübliche Anwendergeräte eh Sensoren umfassen, die Lageinformationen bereitstellen, kann mithilfe dieser Lageinformationen, die Vermutung, dass sich das Anwendergerät in der Dockingstation befindet, validiert werden, wodurch sich die Erkennungsgenauigkeit und Verlässlichkeit erhöhen kann.

Beim Kalibrierungsprozess kann ausgenutzt werden, dass viele Dockingstationen im Feld bereits im Einsatz sind. In einigen Ausführungsformen ist ein Server vorgesehen, der im Feld als sinnvoll ermittelte Signalstärke-Schwellenwerte in Kombination mit dem zugehörigen Typ des Anwendergeräts speichert, um so einem Nutzer einer neuen Dockingstation, die gerade kalibriert werden soll, einen ersten Schätzwert eines sinnvollen Signalstärke-Schwellenwerts bereitstellen zu können.

Die Dockingstation kann ein oder mehrere Sensoren umfassen (z.B. ein oder mehrere Lagesensoren), die eingerichtet sind, Sensordaten in Bezug auf die Lage, Ausrichtung und/oder Orientierung der Dockingstation zu ermitteln. Das Steuermodul der Dockingstation kann eingerichtet sein, auf Basis der Sensordaten die Lage der Dockingstation zu ermitteln und zu berücksichtigen, um zu bestimmen, ob sich das bestimmte Anwendergerät in der Halterung befindet oder nicht. Insbesondere kann erkannt werden, dass die Dockingstation schief aufgestellt ist. Die Lage der Dockingstation kann dann bei der Auswertung der Lageinformation des bestimmten Anwendergeräts berücksichtigt werden. So kann die Zuverlässigkeit eines (funktionalen) Andockvorgangs weiter erhöht werden.

Das Steuermodul kann eingerichtet sein, die Kommunikationseinheit zu veranlassen, das Aussenden von Beacons zu unterbinden, sobald das bestimmte Anwendergerät, welches sich in der Halterung befindet, identifiziert wurde und/oder sobald eine drahtlose Kommunikationsverbindung mit dem identifizierten Anwendergerät aufgebaut wurde. So kann ein besonders energieeffizienter Andockvorgang ermöglicht werden.

Weiter oben wurde ein Andockvorgang beschrieben, bei der die Auswertung eines Signalstärkewertes in der Dockingstation erfolgt. Dies ist vorteilhaft, da so ein Andockversuch von einem Anwendergerät, das sich nicht in der Halterung der Dockingstation befindet, zuverlässig unterbunden werden kann (da durch die Dockingstation die Signalstärkewerte von unterschiedlichen Anwendergeräten auswertet und verglichen werden können, um z.B. das Anwendergerät mit dem höchsten Signalstärkewert zu identifizieren).

Alternativ oder ergänzend kann die Auswertung eines Signalstärkewertes in einem Anwendergerät erfolgen. Insbesondere kann dabei von dem jeweiligen Anwendergerät überprüft werden, ob es sich in der Halterung der Dockingstation befindet oder nicht. In diesem Zusammenhang kann das Steuermodul der Dockingstation eingerichtet sein, die Kommunikationseinheit zu veranlassen, zumindest ein Beacon auszusenden (wie bereits oben dargelegt).

Die ein oder mehreren Anwendergeräte im Umfeld der Dockingstation können dann jeweils den Signalstärkewert (insbesondere den RSSI-Wert) des an dem jeweiligen Anwendergerät empfangenen Beacons ermitteln. Des Weiteren kann das Steuermodul eines Anwendergeräts eingerichtet sein, den jeweils ermittelten Signalstärkewert mit einem (gespeicherten) Signalstärke-Schwellenwert zu vergleichen. Der Signalstärke-Schwellenwert kann dabei im Rahmen einer Kalibrierungsphase (siehe oben) ermittelt und auf einer Speichereinheit des Anwendergeräts gespeichert worden sein. Durch die Ermittlung des Signalstärke-Schwellenwertes im Rahmen einer Kalibrierungsphase können für die einzelnen Anwendergeräte, die in Zusammenhang mit der Dockingstation verwendet werden, jeweils spezifische Signalstärke-Schwellenwerte ermittelt (und gespeichert) werden, um den Geräte-spezifischen Zusammenhang zwischen Signalstärke und Distanz abzubilden. Die Signalstärke-Schwellenwerte für unterschiedliche Anwendergeräte können sich (ggf. signifikant) voneinander unterscheiden.

Wenn auf Basis des Signalstärkewertes und ggf. auf Basis von weiterer Information, wie z.B. der Neigung und/oder der Lage des Anwendergeräts (die auf Basis der Sensordaten von ein oder mehreren Sensoren des Anwendergeräts ermittelt werden kann), von dem Anwendergerät entschieden wird, dass sich das Anwendergerät in der Halterung der Dockingstation befindet, so kann von dem bestimmten Anwendergerät ein Antwortsignal an die Dockingstation gesendet werden. Dabei kann das Antwortsignal Identitätsinformation in Bezug auf die Identität des Anwendergeräts (z.B. eine MAC Adresse) umfassen. Beispielsweise kann als Antwortsignal ein (Antwort-) Signal als Audio pairing-Versuch an die Dockingstation gesendet werden.

Die Dockingstation kann eingerichtet sein, das Antwortsignal von dem Anwendergerät zu empfangen. Des Weiteren kann das Steuermodul der Dockingstation eingerichtet sein, die Kommunikationseinheit in Reaktion darauf zu veranlassen, selektiv und/oder ausschließlich mit dem durch die Identitätsinformation angezeigten Anwendergerät und insbesondere mit keinem anderen Anwendergerät eine drahtlose Kommunikationsverbindung aufzubauen, um das durch die Identitätsinformation angezeigte Anwendergerät funktional an der Dockingstation anzudocken. Alternativ oder ergänzend kann der Verbindungsaufbau einer drahtlosen Kommunikationsverbindung durch das Anwendergerät veranlasst und/oder bewirkt und/oder gestaltet werden. So kann ein effizientes und zuverlässiges (funktionales) Andocken eines Anwendergeräts bewirkt werden.

Das Steuermodul der Dockingstation kann eingerichtet sein, auf Basis von Sensordaten eines Sensors (z.B. eines Näherungssensors, eines Bewegungssensors, eines Mikrofonarray, etc.) der Dockingstation und/oder des Anwendergerät, das sich in der Halterung der Dockingstation befindet, und/oder auf Basis von Sensordaten eines externen Sensors zu bestimmen, ob sich ein Nutzer im Umfeld der Dockingstation befindet oder nicht. Mit anderen Worten, es kann eine Präsenzerkennung erfolgen.

Des Weiteren kann das Steuermodul der Dockingstation eingerichtet sein, zu bewirken, dass eine Steuerung, insbesondere eine Sprachsteuerung, einer (ggf. sicherheitskritischen) Funktion der Dockingstation, des Anwendergeräts und/oder eines weiteren Geräts (insbesondere eines Hausgeräts, etwa eines Herds), bei der die Dockingstation verwendet wird, unterbunden wird, wenn bestimmt wird, dass sich kein Nutzer im Umfeld der Dockingstation befindet. Beispielsweise kann es unterbunden werden, dass (z.B. mittels Sprachsteuerung) über die Dockingstation eine Funktion eines Hausgeräts ausgelöst wird, wenn bestimmt wird, dass sich kein Nutzer in dem direkten Umfeld (z.B. in dem Raum) der Dockingstation befindet. So kann die Sicherheit des Betriebs eines Hausgeräts erhöht werden.

Gemäß einem weiteren Aspekt wird eine Dockingstation für ein elektronisches Anwendergerät beschrieben. Die in diesem Dokument beschriebenen Aspekte sind einzeln oder in Kombination auch für diese Dockingstation anwendbar. Wie bereits oben dargelegt, kann die Dockingstation ein Gehäuse mit einer Halterung umfassen, die ausgebildet ist, ein Anwendergerät an oder in der Dockingstation zu halten. Das Anwendergerät kann mechanisch und/oder funktional an die Dockingstation angedockt sein.

Des Weiteren kann die Dockingstation ein Steuermodul umfassen, das eingerichtet ist, auf Basis von Sensordaten eines Sensors der Dockingstation und/oder eines Sensors des Anwendergerät, das sich in der Halterung der Dockingstation befindet, zu bestimmen, ob sich ein Nutzer im Umfeld der Dockingstation befindet oder nicht. Das Steuermodul kann ferner eingerichtet sein, zu bewirken, dass eine Steuerung, insbesondere eine Sprachsteuerung, einer Funktion der Dockingstation, des Anwendergeräts und/oder eines weiteren Geräts (insbesondere eines Hausgeräts) unter Verwendung der Dockingstation unterbunden wird, wenn bestimmt wird, dass sich kein Nutzer im Umfeld der Dockingstation befindet. So kann insbesondere die Sicherheit des Betriebs eines Hausgeräts erhöht werden.

Gemäß einem weiteren Aspekt wird eine Vorrichtung (z.B. eine Dockingstation und/oder ein Smart Speaker) zur Steuerung eines Geräts (z.B. eines Hausgeräts) beschrieben. Die in diesem Dokument beschriebenen Aspekte sind einzeln oder in Kombination auch für diese Vorrichtung anwendbar. Die Vorrichtung kann eingerichtet sein, mittels zumindest eines Mikrofons ein Audiosignal zu erfassen. Das zumindest eine Mikrofon kann dabei Teil der Vorrichtung sein. Des Weiteren kann die Vorrichtung eingerichtet sein, auf Basis des Audiosignals ein Steuersignal für ein Gerät (z.B. für ein Hausgerät) zu ermitteln. Insbesondere kann durch die Vorrichtung eine Sprachsteuerung des Geräts ermöglicht werden.

Die Vorrichtung kann ferner eingerichtet sein, auf Basis von Sensordaten eines Sensors zu bestimmen, ob sich ein Nutzer im Umfeld der Vorrichtung befindet oder nicht. Des Weiteren kann die Vorrichtung eingerichtet sein, zu bewirken, dass eine Steuerung einer Funktion des Geräts auf Basis des Steuersignals (insbesondere eine Sprachsteuerung des Geräts) unterbunden wird, wenn bestimmt wird, dass sich kein Nutzer im Umfeld der Vorrichtung befindet. So kann z.B. die Sicherheit des Betriebs eines Hausgeräts erhöht werden.

Gemäß einem weiteren Aspekt wird ein Verfahren zum Andocken eines elektronischen Anwendergeräts an eine Dockingstation beschrieben. Die in diesem Dokument beschriebenen Aspekte zu einem Anwendergerät und/oder zu einer Dockingstation sind einzeln oder in Kombination auf das Verfahren anwendbar.

Das Verfahren umfasst das Bestimmen, dass sich ein Anwendergerät in der Halterung der Dockingstation befindet 2. (auf Basis der Sensordaten eines Belegungssensors der Dockingstation). Des Weiteren umfasst das Verfahren (in Reaktion auf das Bestimmen) das Aussenden zumindest eines Beacons von der Dockingstation.

Außerdem umfasst das Verfahren das Ermitteln eines Signalstärkewertes, insbesondere eines RSSI-Wertes, des Beacons an einem ersten Anwendergerät. Der Signalstärkewert kann durch das erste Anwendergerät ermittelt werden. Das Verfahren umfasst ferner das Bestimmen, auf Basis des Signalstärkewertes des ersten Anwendergeräts, ob sich das erste Anwendergerät in der Halterung der Dockingstation befindet oder nicht. Zu diesem Zweck kann der Signalstärkewert mit einem Signalstärke-Schwellenwert verglichen werden. Die Auswertung darüber, ob sich das erste Anwendergerät in der Haltung der Dockingstation befindet oder nicht, kann in dem ersten Anwendergerät und/oder in der Dockingstation erfolgen.

Des Weiteren umfasst das Verfahren das Aufbauen einer drahtlosen Kommunikationsverbindung zwischen dem ersten Anwendergerät und der Dockingstation, wenn bestimmt wurde, dass sich das erste Anwendergerät in der Halterung der Dockingstation befindet, um das erste Anwendergerät funktional an der Dockingstation anzudocken. Der Aufbau der Kommunikationsverbindung kann dabei von der Dockingstation und/oder von dem Anwendergerät angestoßen werden. Das beschriebene Verfahren ermöglicht eine flexible und effiziente Erweiterung des Funktionsumfangs einer Dockingstation und/oder eines Anwendergeräts.

Das Verfahren kann ferner umfassen, das Bestimmen, dass sich das erste Anwendergerät nicht mehr in der Halterung der Dockingstation befindet. In Reaktion darauf kann dann automatisch die drahtlose Kommunikationsverbindung zwischen der Dockingstation und dem ersten Anwendergerät beendet werden (z.B. durch die Dockingstation und/oder durch das erste Anwendergerät).

Das Durchführen eines Andockvorgangs, bei dem der Signalstärkewert von dem ersten Anwendergerät ermittelt wird, und basierend auf dem Signalstärkewert (in autonomer Weise) von dem ersten Anwendergerät entschieden wird (z.B. durch einen Vergleich des Signalstärkewertes mit dem in dem ersten Anwendergerät gespeicherten Signalstärke-Schwellenwert), ob sich das erste Anwendergerät in der Halterung der Dockingstation befindet, ist vorteilhaft, da dabei die Dockingstation nicht befähigt werden muss, von mehreren unterschiedlichen Anwendergeräten Antwortsignale zu empfangen (was typischerweise den Aufbau einer Kommunikationsverbindung mit dem jeweiligen Anwendergerät erfordert). Es kann dann selektiv von dem ersten Anwendergerät eine Anfrage an die Dockingstation gesendet werden, eine (drahtlose) Kommunikationsverbindung aufzubauen, um den (funktionalen) Andockvorgang durchzuführen.

Im Weiteren wird die Erfindung anhand von in der beigefügten Zeichnung dargestellten Ausführungsbeispielen näher beschrieben. Dabei zeigen
Figur 1a ein Anwendergerät und eine Andockstation für ein Anwendergerät in einer Frontansicht;
Figur 1b ein Anwendergerät und eine Andockstation in einer Seitenansicht;
Figuren 2a, 2b beispielhafte Komponenten eines Anwendergeräts bzw. einer Andockstation;
Figur 3 einen beispielhaften Andockprozess;
Figur 4a ein Ablaufdiagramm eines beispielhaften Verfahrens zur Kalibrierung einer Andockstation;
Figur 4b ein Ablaufdiagramm eines beispielhaften Verfahrens zum Andocken eines Anwendergeräts an einer Andockstation; und
Figur 5 ein Ablaufdiagramm eines weiteren beispielhaften Verfahrens zum Andocken eines Anwendergeräts an einer Andockstation.

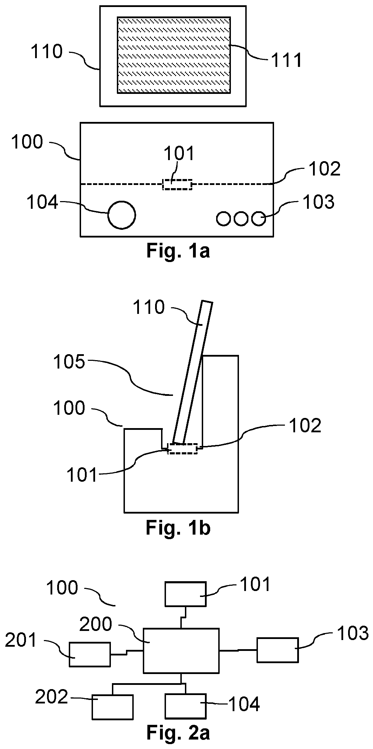

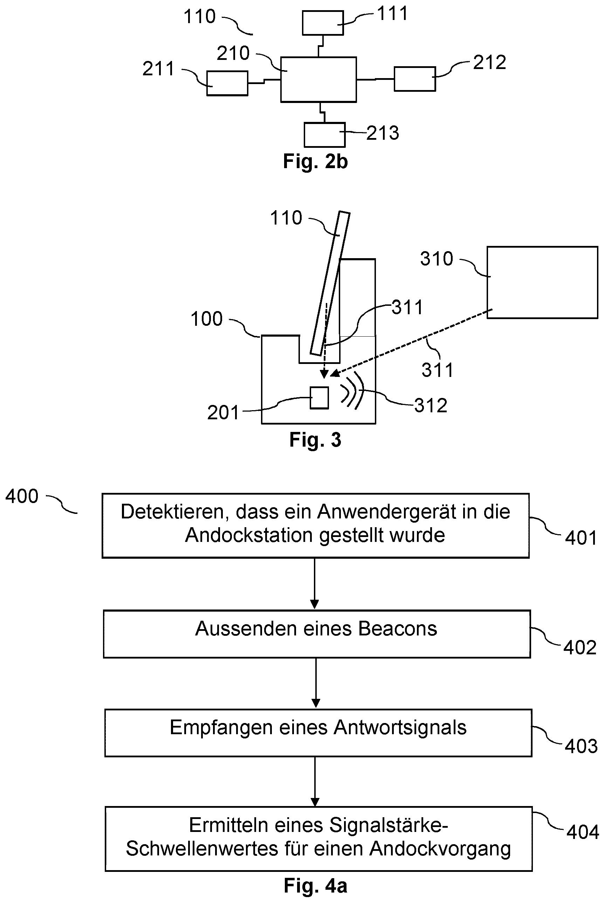

Wie eingangs dargelegt, befasst sich das vorliegende Dokument mit der technischen Aufgabe, den Komfort eines Nutzers eines Anwendergeräts, insbesondere bei einer Tätigkeit in einem Haushalt, zu erhöhen. In diesem Zusammenhang zeigen Figuren 1a und 1b ein beispielhaftes Anwendergerät 110, insbesondere einen Tablet PC oder ein Smartphone, in einer Frontansicht bzw. in einer Seitenansicht. Das Anwendergerät 110 kann einen (berührungsempfindlichen) Bildschirm 111 umfassen. Des Weiteren kann das Anwendergerät 110, wie in Fig. 2b dargestellt, zumindest ein Steuermodul 210 umfassen, das eingerichtet ist, Funktionen des Anwendergeräts 110, wie z.B. die Ausgabe von Bildinformation über den Bildschirm 111, zu steuern. Ferner kann das Anwendergerät 110 ein oder mehreren Kommunikationseinheiten 211 umfassen, die eine (drahtlose) Kommunikation des Anwendergeräts 110 ermöglichen, wie z.B. WLAN (Wireless Local Area Network), LTE (Long Term Evolution) oder Bluetooth (insbesondere Bluetooth Low Energy, BLE). Des Weiteren kann das Anwendergerät 110 ein oder mehrere Sensoren 213 umfassen, wie z.B. einen Positionssensor (etwa eine GPS Empfänger), einen Gyrosensor, eine Inertial Measurement Unit (IMU), einen Beschleunigungssensor, einen Schwerkraft-Sensor, etc. Ferner kann das Anwendergerät 110 eine Speichereinheit 212 umfassen, auf der Daten gespeichert werden können (z.B. ein Signalstärke-Schwellenwert für einen Dockingprozess).

Des Weiteren zeigen Figuren 1a und 1b eine Andockstation 100, die eine Aufnahme bzw. Halterung 105 für das Anwendergerät 110 aufweist. Dabei können die Andockstation 100 und insbesondere die Halterung 105 derart ausgebildet sein, dass beliebige Typen von Anwendergeräten 110 in die Halterung 105 gestellt werden können. Beispielsweise kann die Halterung 105 als (im Wesentlichen rechteckförmige) Aussparung oder Nut in dem Gehäuse der Andockstation 100 ausgebildet sein, in die Anwendergeräte 110 unterschiedlicher Größe hineingestellt werden können. Die Halterung 105 kann z.B. ausgebildet sein, beliebige Anwendergeräte 110 aufzunehmen, solange die Anwendergeräte 110 eine Dicke von 1 cm oder weniger und/oder eine Breite bzw. Höhe von 30cm oder weniger aufweisen.

Die Halterung 105 kann derart ausgebildet sein, dass ein in die Halterung 105 gestelltes Anwendergerät 110 schräg an zumindest einer Wand der Halterung 105 anlehnt, und sich dabei nach Möglichkeit zumindest ein Teil des Bildschirms 111 (und bevorzugt der gesamte Bildschirm 111) des Anwendergeräts 110 über die Halterung 105 bzw. über die Andockstation 100 hinaus erstreckt, so dass zumindest ein Teil des Bildschirms 111 (und bevorzugt der gesamte Bildschirm 111) des Anwendergeräts 110 für einen Nutzer sichtbar bleibt, auch dann, wenn das Anwendergerät 110 in die Andockstation 100 gestellt wurde.

Die Halterung 105 kann, z.B. an einem Boden 102 der Halterung 105, einen Belegungssensor 101 umfassen, der eingerichtet ist, zu detektieren, ob ein Anwendergerät 110 in die Halterung 105 der Andockstation 100 gestellt wurde oder nicht. Der Belegungssensor 101 kann z.B. einen Taster umfassen, der durch das Anwendergerät 110 betätigt wird, wenn sich das Anwendergerät 110 in der Halterung 105 befindet. Alternativ oder ergänzend kann der Belegungssensor 101 eine Lichtschranke umfassen, die ausgelöst wird, wenn das Anwendergerät 110 in die Halterung 105 der Andockstation 100 gestellt wird.

Die Andockstation 100 umfasst ferner zumindest einen Lautsprecher 104, über den Audiosignale ausgegeben werden können. Des Weiteren umfasst die Andockstation 100 ein oder mehrere Mikrofone 103, z.B. ein Mikrofon-Array, mit denen Audiosignale erfasst werden können. Ein Steuermodul 200 der Andockstation (siehe Fig. 2a) kann eingerichtet sein, die von den ein oder mehreren Mikrofonen 103 erfassten Audiosignale auszuwerten (z.B. zur Spracherkennung). Es kann dann in Abhängigkeit von den ausgewerteten Audiosignalen Information ermittelt werden (z.B. aus einer Internet-Datenbank), und die Information kann als Audiosignal über den Lautsprecher 104 ausgegeben werden. Die Andockstation 100 kann somit insbesondere als Sprachassistent ausgebildet sein.

Des Weiteren umfasst die Andockstation 100 zumindest eine Kommunikationseinheit 201 , die eine (drahtlose) Kommunikation des Anwendergeräts 110 ermöglicht, wie z.B. WLAN (Wireless Local Area Network), LTE (Long Term Evolution) oder Bluetooth (insbesondere Bluetooth Low Energy, BLE).

Die Andockstation 100, insbesondere das Steuermodule 200 der Andockstation 100, kann eingerichtet sein, zu detektieren, dass ein Anwendergerät 110 in die Andockstation 100 gesteckt bzw. gestellt wurde. In Reaktion darauf kann veranlasst werden, dass das Anwendergerät 110 (funktional) an die Andockstation 100 angedockt wird, insbesondere um ein gemeinsames Gerät zu bilden, das die Funktionen des Anwendergeräts 110 und der Andockstation 100 umfasst. Durch das Andocken kann somit bewirkt werden, dass einerseits der Funktionsumfang des Anwendergeräts 110 durch zumindest eine Funktion der Andockstation 100 erweitert wird und/oder dass andererseits der Funktionsumfang der Andockstation 100 um zumindest eine Funktion des Anwendergeräts 110 erweitert wird.

Zum Andocken kann eine (drahtlose) Kommunikationsverbindung zwischen der Andockstation 100 und dem Anwendergerät 110, insbesondere zwischen zumindest einer Kommunikationseinheit 201 der Andockstation 100 und zumindest einer Kommunikationseinheit 211 des Anwendergeräts 110, aufgebaut werden. Die Kommunikationsverbindung kann dann als Daten-Bus zwischen der Andockstation 100 und dem Anwendergerät 110 verwendet werden, um die o.g. Erweiterung des Funktionsumfangs zu bewirken.

Die Andockstation (auch als Dockingstation bezeichnet) 100 kann z.B. eine Sprachsteuerung als primäre Interaktionsmethode aufweisen. Ggf. kann die Andockstation 100 zusätzliche Interaktions-Modalitäten aufweisen. Die Andockstation 100 kann in einem Zustand ohne ein zusätzliches Anwendergerät 110 ein Sprachassistent sein bzw. einen Sprachassistenten umfassen.

Dabei kann ein Mikrofon-Array (mit mindestens zwei Mikrophonen 103) an der Andockstation 100 Schall phasenversetzt erfassen und anhand von verschiedenen Algorithmen (z.B. Beamforming, Echocancellation, Far-Field-Voice, etc.) auswerten, so dass Störsignale (wie z.B. eine Dunstabzugshaube, ein Fernseher, etc.) ausgeblendet werden und nur der Sprecher (z.B. in Reaktion auf ein Schlüsselwort) erfasst wird. Die Sprachaufnahme kann (in der Andockstation 100 oder in der Cloud) einer Spracherkennung unterzogen werden, und eine erkannte Anweisung kann ausgewertet und ausgeführt werden (z.B. zur internen Steuerung oder zur Steuerung eines Hausgeräts). Antworten kann die Andockstation 100 über einen internen Lautsprecher 104 abspielen. Ein visuelles Feedback kann die Andockstation 100 ggf. über LEDs (zum Beispiel in Form eines LED-Rings oder -Streifens) an den Nutzer ausgeben.

Der Funktionsumfang der Andockstation 100 kann durch das Docken eines externen Anwendergeräts 110 (z.B. eines Tablets und/oder Smartphones), insbesondere herstellerunabhängig und/oder betriebssystemunabhängig, erweitert werden. Dazu kann die Andockstation 100 eingerichtet sein, das physikalisch Docken (insbesondere das Einstecken in den Halter bzw. die Halterung 105) automatisch zu erkennen. Des Weiteren kann die Andockstation 100 eingerichtet sein, sich automatisch (über eine drahtlose Kommunikationsverbindung) mit dem Anwendergerät 110 zu verbinden. Alternativ kann das Anwendergerät 110 die Kommunikationsverbindung mit der Andockstation 100 herstellen. Als Folge daraus kann der Funktionsumfang der Andockstation 100 um den (berührungsempfindlichen) Bildschirm 111 des Anwendergeräts 110 (z.B. für eine graphische Benutzeroberfläche bzw. GUI) erweitert werden.

Die Verbindung zu dem Anwendergerät 110 kann wieder automatisch getrennt werden, sobald das Anwendergerät 110 aus der Halterung 105 der Andockstation 100 entnommen wird.

Die Andockstation 100 kann einen berührungslosen Gestensensor 202 umfassen, der es einem Nutzer ermöglicht, das Anwendergerät 110 (z.B. eine Applikation auf dem Anwendergerät 110) zu steuern. Der Gestensensor 202 wird dabei vorzugsweise nur dann eingeschaltet, wenn ein Anwendergerät 110 an die Andockstation 100 gedockt ist. Der Gestensensor 202 kann zum Beispiel als kapazitiver und/oder optischer Näherungssensor ausgeführt sein (und ggf. auch aus mehreren Einzelsensoren bestehen).

Die Andockstation 100 kann zwei oder mehrteilig ausgeführt sein. Dabei können z.B. der Lautsprecher 104, die ein oder mehreren Mikrophone 103, das Steuermodul 200 (z.B. ein Mikroprozessor), ggf. mit Sprachverarbeitungsalgorithmen, und ein oder mehrere Kommunikationselemente 201 (WLAN, Bluetooth, ...) in einem ersten Geräteteil angeordnet sein. Das erste Geräteteil kann z.B. permanent mit (Netz-) Strom und/oder aus einem (wiederaufladbaren und/oder elektrochemischen) Energiespeicher versorgt werden. Des Weiteren können in einem zweiten Geräteteil der Docking-Sensor 101, ggf. der Gestensensor 202 und ggf. zusätzliche ein oder mehreren Kommunikationselemente 201 angeordnet sein, wobei der zweite Geräteteil ggf. batteriebetrieben ist. Der zweite Geräteteil kann dann zum Laden der Batterie (z.B. induktiv oder über Pins) bei Bedarf mit dem ersten Geräteteil verbunden werden.

Die Andockstation 100 kann einen Haltemechanismus 105 aufweisen, der im Zustand ohne gedocktes bzw. eingestelltes Anwendergerät 110 flächenbündig im Gehäuse der Andockstation 100 verschwindet und damit (im Wesentlichen) unsichtbar wird. Die Andockstation 100 kann derart ausgebildet sein, dass sobald ein Anwendergerät 110 auf bzw. in den Halter 105 gestellt wird, sich der Halter 105 automatisch (mechanisch oder über einen Motor aktuiert) ausklappt und daraufhin das Anwendergerät 110 in einem definierten Winkel stabil festhält.

Es wird somit eine smarte Dockingstation 100 für Anwendergeräte 110 beschrieben, die unabhängig von Betriebssystemen und Hersteller der Anwendergeräte 110 ist. Die Dockingstation 100 kann zum automatischen Promoten und/oder Öffnen von spezifischen Inhalten auf dem Anwendergerät 110 verwendet werden, wobei dabei Sprachsteuerung als primäre Interaktionsmethode und ggf. zusätzliche Interaktions-Modalitäten verwendet werden können. Die Dockingstation 100 kann eingerichtet sein, das physikalische bzw. mechanische Andocken eines Anwendergeräts 110 in die Halterung 105 selbständig zu erkennen, z.B. über eine oder eine Kombination aus folgenden Technologien und Sensoren in der Dockingstation 100 und/oder dem Anwendergerät 110: Bluetooth; WiFi; NFC; Näherungssensor; Schalter/Taster; Beschleunigungssensor, etc.

Wird ein Anwendergerät 100 gedockt, so wird das Anwendergerät 100 automatisch mit der Dockingstation 100 über eine drahtlose Kommunikationsverbindung gekoppelt, z.B. über eine oder mehrere der oben genannten Technologien. Außerdem kann ggf. automatisch eine der folgenden Aktionen durchgeführt werden:
- Ausgeben einer Aufforderung zum Besuchen einer Website oder zum Herunterladen einer App (z.B. über BLE oder Eddystone);
- Automatisches Öffnen einer installierten App, um spezifische Inhalte anzuzeigen; und/oder
- Ändern des Status, der Eigenschaften und/oder der Inhalte einer App.

Es lassen sich somit durch das Docken eines nutzereigenen Anwendergeräts 110 mit der Dockingstation 100 bestimmte Inhalte übermitteln und/oder Eigenschaften des Anwendergeräts 110 anpassen. Im Küchenkontext kann zum Beispiel eine App geöffnet werden, die dem Nutzer Zugang zu Rezepten gibt und/oder durch die Küchengeräte angesteuert werden können.

Die Dockingstation 100 kann als ein kompaktes Modul ausgebildet sein, das ggf. befestigt werden kann, z.B. an einer Wand oder an einem Küchengerät. Die Dockingstation 100 kann mit einem mechanischen Tablethalter integriert sein.

Die Dockingstation 100 kann ggf. weitere Funktionalitäten, durch entsprechende Sensoren und/oder Aktoren, bereitstellen. Beispielhafte Funktionalitäten sind:
- Gestensteuerung von Apps auf dem Anwendergerät 110 über einen Gestensensor 202 in der Dockingstation 100, der die mit den Gesten verknüpften Befehle über eine drahtlose Kommunikationsverbindung an das Anwendergerät 110 und ggf. an eine aktive App auf dem Anwendergerät 110 übermittelt. Damit kann die Dockingstation 100 um eine berührungslose Interaktionsschnittstelle erweitert werden.
- ein oder mehrere Mikrophone 103 (insbesondere ein Mikrophon-Array) zusammen mit Sprachverarbeitungssoftware zur Sprachinteraktion, um Sprachbefehle durch den Nutzer aufzunehmen. Aufgenommene Sprachbefehle könnten lokal von der Dockingstation 100 weiterverarbeitet und in entsprechende Reaktionen umgewandelt werden. Alternativ oder ergänzend können Sprachbefehle von der Dockingstation 100 über das Anwendergerät 110 oder direkt für eine Weiterverarbeitung in die Cloud geschickt werden.
- Ein oder mehrere Lautsprecher 104 zur Audiosignalwiedergabe. Die Lautsprecher 104 der Dockingstation 100 können zum Beispiel zur Wiedergabe von Musik o.Ä. von dem Anwendergerät 110 genutzt werden (z.B. als eine Art Bluetooth Speaker). In Kombination mit den ein oder mehreren Mikrophonen 103 kann ein Sprachassistent bereitgestellt werden, der im Zustand zusammen mit dem Anwendergerät 110 wie ein Smart Display und/oder im Zustand ohne dem Anwendergerät 110 wie ein Standard Smart Speaker funktionieren kann.
- Die Dockingstation 100 kann ein relativ einfaches visuelles Feedback, z.B. durch ein oder mehrere LEDs oder durch ein e-ink Display, aufweisen, z.B. um interne Stati anzuzeigen, oder um dem Nutzer ein Feedback zur Interaktion zu signalisieren.
- Die Dockingstation 100 kann ggf. einen weiteren Bildschirm, einen Projektor und/oder ein Hologramm aufweisen, um eine Vergrößerung bzw. Erweiterung des GUI-Inhalts des Anwendergeräts 110 zu ermöglichen; und/oder
- Die Dockingstation 100 kann ggf. einen wiederaufladbaren Akku aufweisen, insbesondere zur besseren Nutzbarkeit und/oder Portabilität.
- Eine drahtlose und/oder drahtgebundene (z.B. USB basierte) Ladefunktion für das Anwendergerät 110.

Wie bereits oben dargelegt, ist das Steuermodul 200 der Dockingstation 100 eingerichtet, auf Basis der Sensordaten des Belegungssensors 101 zu detektieren, dass ein Anwendergerät 100 in die Halterung 105 der Dockingstation 100 gestellt wurde. Es kann somit erkannt werden, dass ein physikalisches und/oder mechanischen Andocken zwischen Dockingstation 100 und einem Anwendergerät 110 erfolgt ist. In Reaktion darauf kann ein Prozess zum Aufbau der Kommunikation zwischen der Dockingstation 100 und dem Anwendergerät 110 gestartet werden.

Zunächst kann dabei ermittelt werden, welches Anwendergerät 110 in der Umgebung der Dockingstation 100 in die Halterung 105 der Dockingstation 100 gestellt wurde. Zu diesem Zweck werden, wie in Fig. 3 dargestellt, von der Dockingstation 100 (insbesondere von einer Kommunikationseinheit 201) ein oder mehrere Beacons 312 (z.B. BLE Beacons) ausgesendet werden. Dabei können die Frequenz und/oder die Energie der ein oder mehreren Beacons 312 eingestellt und/oder angepasst werden (insbesondere derart, dass die Wahrscheinlichkeit dafür, dass ein Anwendergerät 110 detektiert wird und/oder dass die ein oder mehreren Beacons 312 von einem Anwendergerät 110 detektiert werden können, erhöht wird).

Die ein oder mehreren Beacons 312 können von dem Anwendergerät 110 in der Halterung 105 und ggf. von ein oder mehreren weiteren Anwendergeräten 310 in der Umgebung der Dockingstation 110 empfangen werden. Dabei können die ein oder mehreren Beacons 312 derart ausgebildet sein, dass die ein oder mehreren Beacons 312 ggf. nur dann von einem Anwendergerät 110, 310 empfangen und ausgewertet werden, wenn auf dem Anwendergerät 110, 310 eine bestimmte (für die Dockingstation 100 spezifische) Applikation installiert und/oder aktiv ist.

Die ein oder mehreren Anwendergeräte 110, 310 können dann einen Signalstärkewert, insbesondere einen RSSI (Received Signal Strength Indicator) Wert, von den ein oder mehreren Beacons 312 ermitteln und in jeweils einer Antwortnachricht 311 an die Dockingstation 100 zurücksenden. Die Dockingstation 100 kann dann die Signalstärkewerte der ein oder mehreren Anwendergeräte 110, 310 auswerten, um zu ermitteln, welches Anwendergerät 110, 310 sich in der Halterung 105 der Dockingstation 100 befindet. Dabei kann z.B. überprüft werden, ob der Signalstärkewert größer als ein bestimmter Signalstärke-Schwellenwert ist. Der Signalstärke-Schwellenwert kann dabei ggf. im Rahmen einer Kalibrierung ermittelt worden sein. Die Auswertung der Signalstärkewerte kann ggf. derart erfolgen, dass ein Anwendergerät 110, 310 nur dann als möglicher Kandidat berücksichtigt wird, wenn der Signalstärkewert des Anwendergeräts 110, 310 größer als oder zumindest gleich wie der Signalstärke-Schwellenwert ist.

Wenn nur ein Anwendergerät 110 identifiziert wird, dessen Signalstärkewert größer als der Signalstärke-Schwellenwert ist, so kann darauf geschlossen werden, dass sich dieses Anwendergerät 110 in der Halterung 105 der Dockingstation 100 befindet. Mit diesem Anwendergerät 110 kann dann eine Kommunikationsverbindung (z.B. eine Bluetooth-Verbindung) aufgebaut werden.

Die Antwortnachricht 311 eines Anwendergeräts 110, 310 kann (Lage-) Information umfassen, die auf den Sensordaten von ein oder mehreren Sensoren 213 des Anwendergeräts 110, 310 basieren (z.B. des Gyro-Sensors, des Schwerkraft-Sensors, des Beschleunigungssensors, etc.). Beispielsweise kann die (Lage-) Information die Neigung und/oder die Position des Anwendergeräts 110, 310 anzeigen. Diese (Lage-) Information kann dann bei der Bestimmung des Anwendergeräts 110, 310, welches sich in der Haltung 105 befindet, berücksichtigt werden. So kann das Anwendergerät 110 mit erhöhter Genauigkeit und/oder Zuverlässigkeit identifiziert werden.

Sobald das Anwendergerät 110 identifiziert wurde und eine Kommunikationsverbindung aufgebaut wurde, kann auf dem Anwendergerät 110 eine spezifische Applikation aktiviert werden. Alternativ oder ergänzend können die MAC Adresse und/oder die Seriennummer des Anwendergeräts 110 an die Dockingstation 100 gesendet werden.

Ferner kann der Beaconing-Prozess deaktiviert werden, um den Energieverbrauch zu reduzieren. Dabei kann ein Hysterese-Filter verwendet werden, um ein instabiles Ein- und Ausschalten des Beaconing-Prozesses zu vermeiden.

Wenn der Nutzer das Anwendergerät 110 aus der Halterung 105 nimmt, kann ggf. veranlasst werden, dass die spezifische Applikation auf dem Anwendergerät 110 automatisch deaktiviert wird und/oder dass die Kommunikationsverbindung zwischen dem Anwendergerät 110 und der Dockingstation 100 automatisch beendet wird.

Wie bereits oben dargelegt, kann der Signalstärke-Schwellenwert für eine Dockingstation 100 im Rahmen einer Kalibrierungsphase ermittelt werden. Dabei kann ein Nutzer aufgefordert werden, das Anwendergerät 110 (für das eine Kalibrierung erfolgen soll) in ein oder mehreren unterschiedlichen Weisen (z.B. mit unterschiedlichen Orientierungen und/oder in unterschiedlichen Positionen) in die Halterung 105 zu stellen (ggf. ohne, dass dabei ein anderes Anwendergerät 310 in der Beacon-Reichweite ist). Es können dann über einen (relativ langen) Kalibrierungszeitraum Signalstärkewerte in Reaktion auf ausgesendete Beacons 312 ermittelt und ggf. gemittelt werden, um den Signalstärke-Schwellenwert zu berechnen. Dieser Signalstärke-Schwellenwert kann dann für zukünftige Andockprozesse verwendet werden.

Fig. 4a zeigt ein Ablaufdiagramm eines beispielhaften Verfahrens 400 zur Ermittlung eines Signalstärke-Schwellenwertes für einen (funktionalen) Andockvorgang. Das Verfahren 400 kann durch das Steuermodul 200 einer Dockingstation 100 ausgeführt werden. Das Verfahren 400 umfasst, das Detektieren 401, dass sich ein bestimmtes Anwendergerät 110, das zukünftig an die Dockingstation 100 angedockt werden soll, in der Halterung 105 befindet (auf Basis der Belegungs-Sensordaten des Belegungssensors 101). Des Weiteren umfasst das Verfahren 400 das Aussenden 402 zumindest eines Beacons 312, und in Reaktion darauf, das Empfangen 403 eines Antwortsignal 311 von dem bestimmten Anwendergerät 110. Des Weiteren umfasst das Verfahren 400 das Ermitteln 404, auf Basis des in dem Antwortsignal 311 enthaltenen Signalstärkewertes des Beacons 312 an dem bestimmten Anwendergerät 110, eines Signalstärke-Schwellenwerts, der für einen zukünftigen Andockvorgang eines Anwendergeräts 110 an der Dockingstation 100 verwendet werden kann.

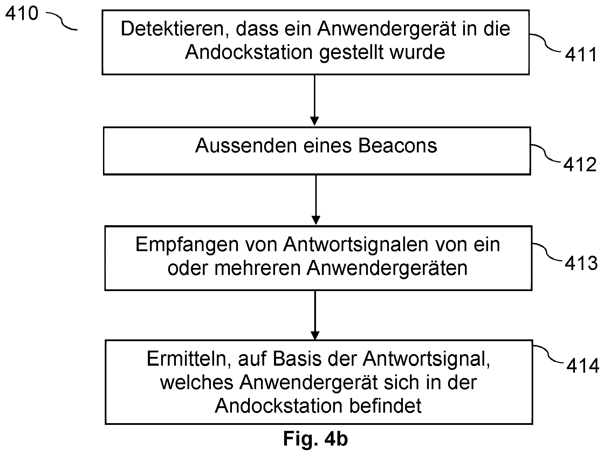

Fig. 4b zeigt ein Ablaufdiagramm eines beispielhaften Verfahrens 410 für einen Andockvorgang an einer Dockingstation 100. Das Verfahren 410 wird durch das Steuermodul 200 der Dockingstation 100 ausgeführt .

Das Verfahren 410 umfasst, das Detektieren 411, dass sich ein Anwendergerät 110 in die Halterung 105 befindet (auf Basis der Belegungs-Sensordaten des Belegungssensors 101). Des Weiteren umfasst das Verfahren 410 das Aussenden 412 zumindest eines Beacons 312, und in Reaktion darauf, das Empfangen 413 von mehreren Antwortsignalen 311 von mehreren Anwendergeräten 110, 310 in einem Umfeld der Dockingstation 100 (z.B. in einem Umkreis von 5-10 Metern um die Dockingstation 100). Ferner umfasst das Verfahren 410, das Ermitteln 414, auf Basis der mehreren Antwortsignale 311 welches der mehreren Anwendergeräte 110, 310 sich in der Halterung 105 der Dockingstation 100 befindet. Es kann dann ein funktionaler Andockvorgang mit dem identifizierten Anwendergerät 110, 310 durchgeführt werden.

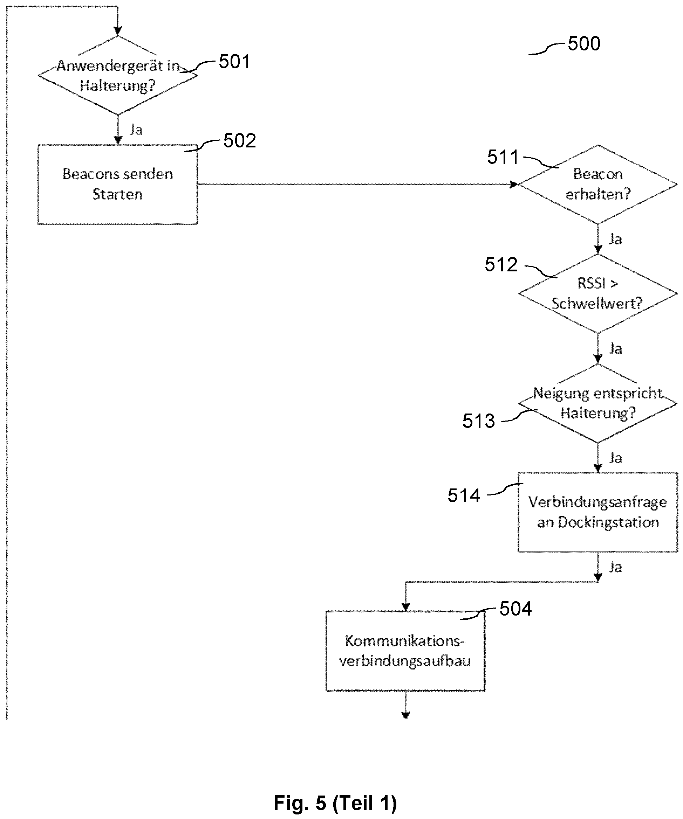

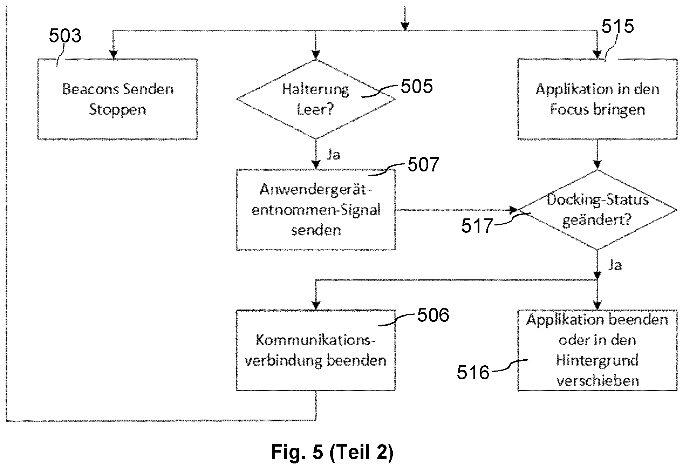

Fig. 5 zeigt ein Ablaufdiagramm eines weiteren beispielhaften Verfahrens 500 zum Andocken eines Anwendergeräts 110 an eine Dockingstation 100. Die Schritte 501 bis 507 werden dabei von der Dockingstation 100 ausgeführt und die Schritte 511 bis 517 und ggf. der Schritt 504 können von einem Anwendergerät 110 ausgeführt werden. Die Dockingstation 100 ist ausgebildet, zu erkennen (Schritt 501), ob ein Anwendergerät 110 in die Halterung 105 der Dockingstation 100 gestellt wurde. Wenn dies erkannt wird, wird bewirkt, dass (zeitlich sequentiell) ein oder mehrere Beacons 312 von der Dockingstation 100 ausgesendet werden (Schritt 502).

Die ein oder mehreren Beacons 312 werden von mehreren Anwendergeräten 110, 310 im Umfeld der Dockingstation 100 empfangen. Insbesondere kann ein Beacon 312 von dem Anwendergerät 110 empfangen werden, das sich in der Halterung 105 der Dockingstation 100 befindet (Schritt 511). Das Steuermodul 210 des Anwendergeräts 110 kann eingerichtet sein, einen Signalstärkewert (insbesondere einen RSSI-Wert) des empfangenen Beacons 312 zu ermitteln. Des Weiteren kann von dem Steuermodul 210 des Anwendergeräts 110 überprüft werden, ob der Signalstärkewert größer als ein (gespeicherter) Signalstärke-Schwellenwert ist (Schritt 512). Des Weiteren kann (optional) die Neigung des Anwendergeräts 110 überprüft werden (Schritt 513). Insbesondere kann überprüft werden, ob die Neigung des Anwendergeräts 110 innerhalb eines bestimmten Sollbereichs liegt, der typische Neigungen des Anwendergeräts 110 anzeigt, wenn sich das Anwendergerät 110 in der Halterung 105 der Dockingstation 100 befindet. Auf Basis des Signalstärkewertes und ggf. auf Basis der Neigung kann somit von dem Anwendergerät 110 selbständig überprüft werden, ob sich das Anwendergerät 110 in der Halterung 105 der Dockingstation 100 befindet oder nicht.

Wenn von dem Anwendergerät 110 bestimmt wird, dass es sich in der Halterung 105 der Dockingstation 110 befindet, kann das Anwendergerät 110 ein Antwortsignal 311 an die Dockingstation 100 (insbesondere an die MAC Adresse der Dockingstation 100) senden (Schritt 514). Insbesondere kann (ggf. in Form eines Antwortsignals 311) eine Verbindungsanfrage für eine (drahtlose) Kommunikationsverbindung von dem Anwendergerät 110 an die Dockingstation 100 gesendet werden. Das Antwortsignal 311 kann dabei ggf. die MAC Adresse des Anwendergeräts 110 umfassen. Alternativ oder ergänzend kann das Antwortsignal 311 eine Aufforderung umfassen, eine drahtlose Kommunikationsverbindung aufzubauen. Des Weiteren kann ggf. eine bestimmte Applikation auf dem Anwendergerät 110 gestartet oder in den Vordergrund gehoben werden (Schritt 515). Das Starten bzw. In-den-Vordergrund-Bringen kann dabei ggf. erst dann erfolgen, wenn die Kommunikationsverbindung aufgebaut wurde (d.h. nach dem Schritt 504).

Die Dockingstation 100 ist eingerichtet, in Reaktion auf das empfangene Antwortsignal 311 eine Kommunikationsverbindung mit dem Anwendergerät 110 aufzubauen (Schritt 504). Alternativ oder ergänzend kann der Aufbau der Kommunikationsverbindung durch das Anwendergerät 110 erfolgen. Des Weiteren kann das Aussenden von Beacons 312 durch die Dockingstation 100 beendet werden (Schritt 503).

Wie bereits oben dargelegt, kann die Dockingstation 100 eingerichtet sein, zu erkennen, dass das Anwendergerät 110 aus der Halterung 105 der Dockingstation 100 entnommen wird bzw. wurde (Schritt 505). Insbesondere kann erkannt werden, dass die Halterung 105 der Dockingstation 100 leer ist. In Reaktion darauf kann bewirkt werden, dass die Kommunikationsverbindung mit dem Anwendergerät 110 beendet wird (Schritt 506). Das Beenden der Kommunikationsverbindung kann dabei durch die Dockingstation 100 und/oder durch das Anwendergerät 110 bewirkt werden. Des Weiteren kann auf dem Anwendergerät 110 bewirkt werden, dass eine bestimmte Applikation auf dem Anwendergerät 110 beendet oder in den Hintergrund verschoben wird (Schritt 516). Insbesondere kann ggf. zunächst von der Dockingstation 100 ein Signal an das Anwendergerät 110 gesendet werden, um dem Anwendergerät 110 anzuzeigen, dass von der Dockingstation 100 erkannt wurde, dass das Anwendergerät 110 aus der Halterung 105 genommen wurde (Schritt 507). Das Anwendergerät 110, insbesondere die Applikation des Anwendergeräts 110, kann eingerichtet sein, wiederholt zu überprüfen, ob sich der Docking-Status geändert hat oder nicht (Schritt 517). Insbesondere kann das Anwendergerät 110 eingerichtet sein, auf ein Signal der Dockingstation 100 zu horchen, das anzeigt, dass sich der Docking-Status geändert hat. Wenn (von dem Anwendergerät 110) erkannt wird, dass sich der Docking-Status geändert (insbesondere, dass das Anwendergerät 110 aus der Halterung 105 genommen wurde), so können daraufhin die Schritte 506 und/oder 516 bewirkt werden.

Die Dockingstation 100 und/oder das an die Dockingstation 100 angedockte Anwendergerät 110 können (allein oder in Kombination) ausgebildet sein, eine Präsenzerkennung eines menschlichen Nutzers im Umfeld der Dockingstation 100 und/oder des Anwendergeräts 110 durchzuführen.

Die Dockingstation 100 und/oder das Anwendergerät 110 können ein oder mehrere Sensoren umfassen, die eingerichtet sind, Sensordaten in Bezug auf einen Nutzer der Dockingstation 100 und/oder des Anwendergeräts 110 zu erfassen. Das Steuermodul 200, 210 der Dockingstation 100 und/oder des Anwendergeräts kann dann eingerichtet sein, auf Basis der Sensordaten zu bestimmen, ob sich der Nutzer in der direkten Umgebung der Dockingstation 110 und/oder des Anwendergeräts 110, insbesondere in dem gleichen Raum wie die Dockingstation 100 und/oder das Anwendergerät 110, befindet.

Die Erkennung einer Person kann z.B. über einzelne oder über eine Kombination der folgenden Sensoren erfolgen:
- Beamforming zur Richtungsbestimmung und/oder zur Entfernungsmessung (aus den Daten des Mikrofonarrays 103) bei der Eingabe eines Sprachkommandos durch den Nutzer;
- ein aktiver Infrarot-Sensor (Ermittlung der Richtung und Entfernung; der Infrarot-Sensor kann gleichzeitig auch als Gestensensor verwendet werden) und/oder ein passiver Infrarot-Sensor (Erkennung einer Bewegung);
- ein kapazitiver Näherungssensor (der Näherungssensor kann gleichzeitig auch als Gestensensor verwendet werden);
- Auswertung eines Kamerabilds (einer Kamera des Anwendergeräts 110 oder der Dockingstation 100);
- ein Radar-Bewegungssensor (der Bewegungssensor kann gleichzeitig auch als Gestensensor verwendet werden); und/oder
- ein Ultraschall und/oder Sonar-Sensor (der Sensor kann gleichzeitig auch Gestensensor verwendet werden).

Die Präsenzerkennung eines menschlichen Nutzers kann zur Freischaltung einer bestimmten Funktionalität verwendet werden (z.B. zur Ansteuerung eines sicherheitskritischen Geräts). Beispielsweise kann es für die Freischaltung einer bestimmten Funktion an einem Gerät (z.B. an einem Herd) erforderlich sein, vor der Freischaltung zu überprüfen, ob sich ein menschlicher Nutzer in dem Raum des Geräts bzw. an dem Gerät befindet. So kann die Sicherheit bei der Fernsteuerung von Geräten erhöht werden. Insbesondere kann so zuverlässig vermieden werden, dass die Freischaltung einer bestimmten Funktion in Reaktion auf ein Sprachkommando ohne Anwesenheit des Nutzers erfolgt (z.B., weil das Sprachkommando über einen Lautsprecher und/oder über eine Fernsprechanlage ausgegeben wurde). Durch die Verwendung einer Präsenzerkennung kann somit die Sicherheit bei einer Sprachsteuerung erhöht werden.

Durch die in diesem Dokument beschriebenen Maßnahmen kann der Komfort für einen Nutzer eines Anwendergeräts 110 erhöht werden. Insbesondere kann es einem Nutzer ermöglicht werden, in effizienter Weise den Funktionsumfang eines Anwendergeräts 110 zu erhöhen.

Die vorliegende Erfindung ist nicht auf die gezeigten Ausführungsbeispiele beschränkt, sondern nur durch den Schutzumfang der vorliegenden Ansprüche. Insbesondere ist zu beachten, dass die Beschreibung und die Figuren nur das Prinzip der vorgeschlagenen Dockingstation veranschaulichen sollen.

## Patentansprüche

1. Dockingstation (100) für ein elektronisches Anwendergerät (110); wobei die Dockingstation (100) umfasst,
- zumindest ein Mikrofon (103) und zumindest einen Lautsprecher (104);
- ein Gehäuse mit einer Halterung (105), die ausgebildet ist, unterschiedliche Typen von Anwendergeräten (110) an oder in der Dockingstation (100) zu halten;
- einen Belegungssensor (101), der eingerichtet ist, Belegungs-Sensordaten zu erfassen, die anzeigen, ob sich ein Anwendergerät (110) in der Halterung (105) befindet oder nicht;
- eine Kommunikationseinheit (201), die für eine drahtlose Datenkommunikation ausgebildet ist; und
- ein Steuermodul (200), das eingerichtet ist,
- auf Basis der Belegungs-Sensordaten zu bestimmen, dass sich ein Anwendergerät (110) in der Halterung (105) befindet;
- die Kommunikationseinheit (201) zu veranlassen, zumindest ein Beacon (312) auszusenden, und in Reaktion darauf, mehrere Antwortsignale (311) von mehreren Anwendergeräten (110, 310) in einem Umfeld der Dockingstation (100) zu empfangen;
- auf Basis der mehreren Antwortsignale (311) zu bestimmen, welches der mehreren Anwendergeräte (110, 310) sich in der Halterung (105) der Dockingstation (100) befindet; und
- über die Kommunikationseinheit (201) eine drahtlose Kommunikationsverbindung mit dem bestimmten Anwendergerät (110), das sich in der Halterung (105) der Dockingstation (100) befindet, aufzubauen.

2. Dockingstation (100) gemäß Anspruch 1, wobei das Steuermodul (200) eingerichtet ist,
- zu veranlassen, dass ein Funktionsumfang der Dockingstation (100) um zumindest eine Funktion des bestimmten Anwendergeräts (110) erweitert wird; und/oder
- eine Anzeigeeinheit (111) des bestimmten Anwendergeräts (110) anzusteuern, bildliche Information auf der Anzeigeeinheit (111) auszugeben.

3. Dockingstation (100) gemäß einem der vorhergehenden Ansprüche, wobei das Steuermodul (200) eingerichtet ist,
- selektiv und/oder ausschließlich mit dem bestimmten Anwendergerät (110, 310) und insbesondere mit keinem anderen der mehreren Anwendergeräte (110, 310) eine drahtlose Kommunikationsverbindung aufzubauen.

4. Dockingstation (100) gemäß einem der vorhergehenden Ansprüche, wobei das Steuermodul (200) eingerichtet ist,
- auf Basis der Antwortsignale (311) entsprechende Signalstärkewerte, insbesondere Received Signal Strength Indicator, kurz RSSI, Werte, des Beacons (312) an den Anwendergeräten (110, 310) zu ermitteln; und
- auf Basis der Signalstärkewerte zu bestimmen, welches der Anwendergeräte (110, 310) sich in der Halterung (105) der Dockingstation (100) befindet.

5. Dockingstation (100) gemäß Anspruch 4, wobei das Steuermodul (200) eingerichtet ist,
- die Signalstärkewerte jeweils mit einem Signalstärke-Schwellenwert zu vergleichen; und
- nur dann zu bestimmen, dass sich ein bestimmtes Anwendergerät (110) in der Halterung (105) der Dockingstation (100) befindet, wenn der Signalstärkewert für das bestimmte Anwendergerät (110) gleich wie oder größer als der Signalstärke-Schwellenwert ist.

6. Dockingstation (100) gemäß einem der vorhergehenden Ansprüche, wobei das Steuermodul (200) eingerichtet ist, in einer Kalibrierungsphase
- einen Nutzer zu veranlassen, ein bestimmtes Anwendergerät (110), das zukünftig an die Dockingstation (100) angedockt werden soll, in die Halterung (105) zu stellen;
- die Kommunikationseinheit (201) zu veranlassen, zumindest ein Beacon (312) auszusenden, und in Reaktion darauf, ein Antwortsignal (311) von dem bestimmten Anwendergerät (110) zu empfangen;
- auf Basis eines in dem Antwortsignal (311) enthaltenen Signalstärkewertes des Beacons (312) an dem bestimmten Anwendergerät (110) einen Signalstärke-Schwellenwert zu ermitteln; und
- den Signalstärke-Schwellenwert für einen zukünftigen Andockvorgang eines Anwendergeräts (110) an der Dockingstation (100) zu verwenden.

7. Dockingstation (100) gemäß Anspruch 6, wobei das Steuermodul (200) eingerichtet ist, in der Kalibrierungsphase,
- den Nutzer zu veranlassen, das bestimmte Anwendergerät (110) sequentiell in einer Mehrzahl von unterschiedlichen Weisen, insbesondere in einer Mehrzahl von unterschiedlichen Positionen und/oder Orientierungen, in die Halterung (105) zu stellen;
- für die Mehrzahl von unterschiedlichen Weisen eine entsprechende Mehrzahl von Signalstärkewerten zu ermitteln; und
- den Signalstärke-Schwellenwert auf Basis der Mehrzahl von Signalstärkewerten, insbesondere auf Basis eines Mittelwerts der Mehrzahl von Signalstärkewerten, zu ermitteln.

8. Dockingstation (100) gemäß einem der vorhergehenden Ansprüche, wobei das Steuermodul (200) eingerichtet ist,
- auf Basis der Antwortsignale (311) Lageinformation in Bezug auf eine Lage, Position, Ausrichtung und/oder Orientierung des jeweiligen Anwendergeräts, von dem das Antwortsignal stammt, (110) zu bestimmen; und
- auf Basis der Lageinformation zu bestimmen, ob sich das jeweilige Anwendergerät (110) in der Halterung (105) befindet oder nicht.

9. Dockingstation (100) gemäß Anspruch 8, wobei die Lageinformation anzeigt und/oder umfasst
- Positionsdaten, insbesondere GPS Koordinaten, eines Positionssensors des jeweiligen Anwendergeräts (110); und/oder
- Orientierungsdaten eines Gyro- und/oder Beschleunigungssensors des jeweiligen Anwendergeräts (110).

10. Dockingstation (100) gemäß einem der vorhergehenden Ansprüche, wobei das Steuermodul (200) eingerichtet ist, die Kommunikationseinheit (201) zu veranlassen, das Aussenden von Beacons (312) zu unterbinden, sobald das Anwendergerät (110), welches sich in der Halterung (105) befindet, identifiziert wurde und/oder sobald eine drahtlose Kommunikationsverbindung mit dem bestimmten Anwendergerät (110) aufgebaut wurde.

11. Dockingstation (100) gemäß einem der vorhergehenden Ansprüche, wobei das Steuermodul (200) eingerichtet ist,
- auf Basis der Belegungs-Sensordaten zu bestimmen, dass das bestimmte Anwendergerät (110) aus der Halterung (105) herausgenommen wird oder wurde; und
- in Reaktion darauf, die Kommunikationseinheit (201) zu veranlassen, die drahtlose Kommunikationsverbindung mit dem bestimmten Anwendergerät (110) zu unterbrechen.

12. Dockingstation (100) gemäß einem der vorhergehenden Ansprüche, wobei
- die Dockingstation (100) zumindest einen Gestensensor (202) umfasst, der eingerichtet ist, Gestendaten in Bezug auf eine von einem Nutzer durchgeführten Geste zu erfassen, oder die Dockingstation dafür eingerichtet ist, mit zumindest einem solchen Gestensensor (202) gekoppelt zu werden; und
- das Steuermodul (200) eingerichtet ist, die Gestendaten, für eine Gesten-basierte Steuerung des bestimmten Anwendergeräts (110), insbesondere einer Software-Applikation des bestimmten Anwendergeräts (110), über die drahtlose Kommunikationsverbindung an das bestimmte Anwendergerät (110) zu senden.

13. Dockingstation (100) gemäß einem der vorhergehenden Ansprüche, wobei
- das Mikrofon eingerichtet ist, Audiodaten in Bezug auf eine von einem Nutzer gesprochene Anweisung zu erfassen; und
- das Steuermodul (200) eingerichtet ist, die Audiodaten, oder davon abgeleitete Steuerdaten, für eine Sprach-basierte Steuerung des bestimmten Anwendergeräts (110), insbesondere einer Software-Applikation des bestimmten Anwendergeräts (110), über die drahtlose Kommunikationsverbindung an das bestimmte Anwendergerät (110) zu senden; und/oder
- das Steuermodul (200) eingerichtet ist, eine bildliche Ausgabe auf einer Anzeigeeinheit (111) des bestimmten Anwendergeräts (110) in Abhängigkeit von den Audiodaten zu steuern.

14. Dockingstation (100) gemäß einem der vorhergehenden Ansprüche, wobei das Steuermodul (200) eingerichtet ist,
- auf Basis von Sensordaten eines Sensors (103, 202) der Dockingstation (100) und/oder eines Sensors des bestimmten Anwendergeräts (110), das sich in der Halterung (105) der Dockingstation (100) befindet, zu bestimmen, ob sich ein Nutzer im Umfeld der Dockingstation (100) befindet oder nicht; und
- zu bewirken, dass eine Steuerung, insbesondere eine Sprach- und/oder Fernsteuerung, einer Funktion der Dockingstation (100), des bestimmten Anwendergeräts (110) und/oder eines weiteren Geräts, insbesondere eines Herds und/oder eines Ofens, unter Verwendung der Dockingstation (100) unterbunden wird, wenn bestimmt wird, dass sich kein Nutzer im Umfeld der Dockingstation (100) befindet.

15. Verfahren (410, 500) zum Andocken eines elektronischen Anwendergeräts (110) an eine Dockingstation (100); wobei das Verfahren (410, 500) folgende Schritte umfasst,
- Bestimmen (411, 501), auf Basis von Belegungs-Sensordaten eines Belegungssensors (101) der Dockingstation (100), dass sich ein Anwendergerät (110) in einer Halterung (105) der Dockingstation (100) befindet;
- Aussenden (502) zumindest eines Beacons (312) von der Dockingstation (100), und in Reaktion darauf, empfangen mehrerer Antwortsignale (311) von mehreren Anwendergeräten (110, 310) in einem Umfeld der Dockingstation;
- Bestimmen, auf Basis der mehreren Antwortsignale (311), welches der mehreren Anwendergeräte (110, 310) sich in der Halterung (105) der Dockingstation (100) befindet; und
- Aufbauen (413, 504) einer drahtlosen Kommunikationsverbindung zwischen der Dockingstation (100) und dem bestimmten Anwendergerät (110), wenn bestimmt wurde, dass sich das bestimmte Anwendergerät (110, 310) in der Halterung (105) der Dockingstation (100) befindet.

## Claims

1. Docking station (100) for an electronic user device (110); wherein the docking station (100) comprises
- at least one microphone (103) and at least one loudspeaker (104);
- a housing with a holder (105), which is embodied to hold different types of user devices (110) on or in the docking station (100);
- an occupancy sensor (101), which is embodied to acquire occupancy sensor data indicating whether or not a user device (110) is located in the holder (105);
- a communication unit (201), which is embodied for wireless data communication; and
- a control module (200), which is configured
- to determine, on the basis of the occupancy sensor data, that a user device (110) is located in the holder (105);
- to cause the communication unit (201) to transmit at least one beacon (312) and, in response thereto, to receive several response signals (311) from several user devices (110, 310) in a vicinity of the docking station (100);
- to determine, on the basis of the several response signals (311), which of the several user devices (110, 310) is located in the holder (105) of the docking station (100); and
- to establish, via the communication unit (201), a wireless communication connection to the specific user device (110) located in the holder (105) of the docking station (100).

2. Docking station (100) according to claim 1, wherein the control module (200) is configured
- to cause a functional scope of the docking station (100) to be extended by at least one function of the specific user device (110); and/or
- to actuate a display unit (111) of the specific user device (110) to output graphical information on the display unit (111).

3. Docking station (100) according to one of the preceding claims, wherein the control module (200) is configured
- to establish a wireless communication connection, selectively and/or exclusively, to the specific user device (110, 310) and in particular to no other of the several user devices (110, 310).

4. Docking station (100) according to one of the preceding claims, wherein the control module (200) is configured
- to ascertain, on the basis of the response signals (311), corresponding signal strength values, in particular received signal strength indicator - RSSI for short - values, of the beacon (312) on the user devices (110, 310); and
- to determine, on the basis of the signal strength values, which of the user devices (110, 310) is located in the holder (105) of the docking station (100).

5. Docking station (100) according to claim 4, wherein the control module (200) is configured
- to compare the signal strength values in each case with a signal strength threshold value; and
- only then to determine that a specific user device (110) is located in the holder (105) of the docking station (100) when the signal strength value for the specific user device (110) is equal to or greater than the signal strength threshold value.

6. Docking station (100) according to one of the preceding claims, wherein the control module (200) is configured, in a calibration phase,
- to cause a user to place a specific user device (110), which is in future to be docked onto the docking station (100), into the holder (105);
- to cause the communication unit (201) to transmit at least one beacon (312) and, in response thereto, to receive a response signal (311) from the specific user device (110);
- to ascertain, on the basis of a signal strength value of the beacon (312) on the specific user device (110) contained in the response signal (311), a signal strength threshold value; and
- to use the signal strength threshold value for a future docking procedure of a user device (110) on the docking station (100).

7. Docking station (100) according to claim 6, wherein the control module (200) is configured, in the calibration phase,
- to cause the user to place the specific user device (110) into the holder (105) sequentially in a plurality of different ways, in particular in a plurality of different positions and/or orientations;
- to ascertain a corresponding plurality of signal strength values for the plurality of different ways; and
- to ascertain the signal strength threshold value on the basis of the plurality of signal strength values, in particular on the basis of a mean value of the plurality of signal strength values.

8. Docking station (100) according to one of the preceding claims, wherein the control module (200) is configured
- to determine, on the basis of the response signals (311), location information in respect of a location, position, alignment and/or orientation of the respective user device from which the response signal originates (110); and
- to determine, on the basis of the location information, whether or not the respective user device (110) is located in the holder (105).

9. Docking station (100) according to claim 8, wherein the location information indicates and/or comprises
- position data, in particular GPS coordinates, of a position sensor of the respective user device (110); and/or
- orientation data of a gyrosensor and/or acceleration sensor of the respective user device (110).

10. Docking station (100) according to one of the preceding claims, wherein the control module (200) is configured to cause the communication unit (201) to inhibit the transmission of beacons (312) as soon as the user device (110) located in the holder (105) has been identified and/or as soon as a wireless communication connection has been established to the specific user device (110).

11. Docking station (100) according to one of the preceding claims, wherein the control module (200) is configured
- to determine, on the basis of the occupancy sensor data, that the specific user device (110) is being or has been removed from the holder (105); and
- in response thereto, to cause the communication unit (201) to interrupt the wireless communication connection to the specific user device (110).

12. Docking station (100) according to one of the preceding claims, wherein
- the docking station (100) comprises at least one gesture sensor (202), which is configured to acquire gesture data in respect of a gesture performed by a user, or the docking station is configured to be coupled to at least one such gesture sensor (202); and
- the control module (200) is configured, for a gesture-based control of the specific user device (110), in particular of a software application of the specific user device (110), to send the gesture data to the specific user device (110) via the wireless communication connection.

13. Docking station (100) according to one of the preceding claims, wherein
- the microphone is configured to acquire audio data in respect of an instruction spoken by a user; and
- the control module (200) is configured, for a voice-based control of the specific user device (110), in particular of a software application of the specific user device (110), to send the audio data or control data derived therefrom to the specific user device (110) via the wireless communication connection; and/or
- the control module (200) is configured to control a graphical output on a display unit (111) of the specific user device (110) as a function of the audio data.

14. Docking station (100) according to one of the preceding claims, wherein the control module (200) is configured
- to determine, on the basis of sensor data of a sensor (103, 202) of the docking station (100) and/or of a sensor of the specific user device (110) located in the holder (105) of the docking station (100), whether or not a user is located in the vicinity of the docking station (100); and
- to cause a control, in particular a voice and/or remote control, of a function of the docking station (100), of the specific user device (110) and/or of a further device, in particular of a cooker and/or of an oven, to be inhibited using the docking station (100) if it is determined that no user is located in the vicinity of the docking station (100).

15. Method (410, 500) for docking an electronic user device (110) onto a docking station (100); wherein the method (410, 500) comprises the following steps:
- determining (411, 501), on the basis of occupancy sensor data of an occupancy sensor (101) of the docking station (100), that a user device (110) is located in a holder (105) of the docking station (100);
- transmitting (502) at least one beacon (312) from the docking station (100) and, in response thereto, receiving several response signals (311) from several user devices (110, 310) in a vicinity of the docking station;
- determining, on the basis of the several response signals (311), which of the several user devices (110, 310) is located in the holder (105) of the docking station (100); and
- establishing (413, 504) a wireless communication connection between the docking station (100) and the specific user device (110) if it has been determined that the specific user device (110, 310) is located in the holder (105) of the docking station (100).

## Revendications

1. Station d'accueil (100) pour un appareil utilisateur électronique (110) ; dans laquelle la station d'accueil (100) comprend,
- au moins un microphone (103) et au moins un haut-parleur (104) ;
- une carcasse avec un support (105) qui est formé pour maintenir différents types d'appareils utilisateur (110) sur ou dans la station d'accueil (100) ;
- un capteur d'occupation (101) aménagé pour détecter des données de capteur d'occupation indiquant si un appareil utilisateur (110) se trouve ou non dans le support (105) ;
- une unité de communication (201) formée pour une communication de données sans fil ; et
- un module de commande (200) aménagé
- pour déterminer, sur la base des données de capteur d'occupation, qu'un appareil utilisateur (110) se trouve dans le support (105) ;
- pour faire en sorte que l'unité de communication (201) émette au moins une balise (312) et reçoive, en réaction, plusieurs signaux de réponse (311) de plusieurs appareils utilisateur (110, 310) dans un environnement de la station d'accueil (100) ;
- pour déterminer, sur la base des plusieurs signaux de réponse (311), lequel des plusieurs appareils utilisateur (110, 310) se trouve dans le support (105) de la station d'accueil (100) ; et
- pour mettre en place, via l'unité de communication (201), une liaison de communication sans fil avec l'appareil utilisateur déterminé (110) qui se trouve dans le support (105) de la station d'accueil (100).

2. Station d'accueil (100) selon la revendication 1, dans laquelle le module de commande (200) est aménagé,
- pour faire en sorte qu'une étendue de fonctions de la station d'accueil (100) soit élargie d'au moins une fonction de l'appareil utilisateur (110) déterminé ; et/ou
- pour commander une unité d'affichage (111) de l'appareil utilisateur déterminé (110) afin d'émettre une information imagée sur l'unité d'affichage (111).

3. Station d'accueil (100) selon l'une des revendications précédentes, dans laquelle le module de commande (200) est aménagé,
- pour mettre en place une liaison de communication sans fil sélectivement et/ou exclusivement avec l'appareil utilisateur déterminé (110, 310) et en particulier avec aucun autre des plusieurs appareils utilisateur (110, 310).

4. Station d'accueil (100) selon l'une des revendications précédentes, dans laquelle le module de commande (200) est aménagé,
- pour établir, sur la base des signaux de réponse (311), des valeurs d'intensité de signal correspondantes, en particulier des valeurs Received Signal Strength Indicator, en abrégé RSSI, de la balise (312) sur les appareils utilisateur (110, 310) ; et
- pour déterminer, sur la base des valeurs d'intensité de signal, lequel des appareils utilisateur (110, 310) se trouve dans le support (105) de la station d'accueil (100).

5. Station d'accueil (100) selon la revendication 4, dans laquelle le module de commande (200) est aménagé,
- pour comparer chaque valeur d'intensité de signal à une valeur de seuil d'intensité de signal ; et
- pour déterminer qu'un appareil utilisateur particulier (110) se trouve dans le support (105) de la station d'accueil (100) uniquement lorsque la valeur d'intensité de signal pour l'appareil utilisateur déterminé (110) est égale ou supérieure à la valeur de seuil d'intensité de signal.

6. Station d'accueil (100) selon l'une des revendications précédentes, dans laquelle le module de commande (200) est aménagé, dans une phase de calibrage,
- pour faire en sorte qu'un utilisateur place dans le support (105) un appareil utilisateur déterminé (110) qui doit être posé sur la station d'accueil (100) à l'avenir ;
- pour faire en sorte que l'unité de communication (201) émette au moins une balise (312) et reçoive, en réaction, un signal de réponse (311) de l'appareil utilisateur déterminé (110) ;
- pour établir, sur la base d'une valeur d'intensité de signal de la balise (312) contenue dans le signal de réponse (311) au niveau de l'appareil utilisateur déterminé (110), une valeur de seuil d'intensité de signal ; et
- pour utiliser la valeur de seuil d'intensité de signal pour une opération de pose future d'un appareil utilisateur (110) sur la station d'accueil (100).

7. Station d'accueil (100) selon la revendication 6, dans laquelle le module de commande (200) est aménagé, dans la phase de calibrage,
- pour faire en sorte que l'utilisateur pose séquentiellement l'appareil utilisateur déterminé (110) dans le support (105) d'une pluralité de façons différentes, en particulier selon une pluralité de positions et/ou d'orientations différentes ;
- pour établir, pour la pluralité de façons différentes, une pluralité correspondante de valeurs d'intensité de signal ; et
- pour établir la valeur de seuil d'intensité de signal sur la base de la pluralité de valeurs d'intensité de signal, en particulier sur la base d'une valeur moyenne de la pluralité de valeurs d'intensité de signal.

8. Station d'accueil (100) selon l'une des revendications précédentes, dans laquelle le module de commande (200) est aménagé,
- pour déterminer, sur la base des signaux de réponse (311), une information de positionnement par rapport à un positionnement, une position, un alignement et/ou une orientation de l'appareil utilisateur respectif d'où le signal de réponse (110) provient ; et
- pour déterminer, sur la base de l'information de positionnement, si l'appareil utilisateur (110) respectif se trouve ou non dans le support (105).

9. Station d'accueil (100) selon la revendication 8, dans laquelle l'information de positionnement indique et/ou comprend
- des données de position, en particulier les coordonnées GPS, d'un capteur de position de l'appareil utilisateur respectif (110) ; et/ou
- des données d'orientation d'un capteur gyroscopique et/ou d'un capteur d'accélération de l'appareil utilisateur respectif (110).

10. Station d'accueil (100) selon l'une des revendications précédentes, dans laquelle le module de commande (200) est aménagé pour faire en sorte que l'unité de communication (201) interdise l'émission de balises (312) dès que l'appareil utilisateur (110) se trouvant dans le support (105) a été identifié et/ou dès qu'une liaison de communication sans fil a été mise en place avec l'appareil utilisateur (110) déterminé.

11. Station d'accueil (100) selon l'une des revendications précédentes, dans laquelle le module de commande (200) est aménagé,
- pour déterminer, sur la base des données de capteur d'occupation, que l'appareil utilisateur déterminé (110) est ou a été retiré du support (105) ; et
- pour faire en sorte, en réaction, que l'unité de communication (201) interrompe la liaison de communication sans fil avec l'appareil utilisateur déterminé (110).

12. Station d'accueil (100) selon l'une des revendications précédentes, dans laquelle
- la station d'accueil (100) comprend au moins un capteur de gestes (202) aménagé pour détecter des données gestuelles en relation avec un geste effectué par un utilisateur, ou la station d'accueil est aménagée pour être couplée à au moins un tel capteur de gestes (202) ; et
- le module de commande (200) est aménagé pour envoyer les données gestuelles à l'appareil utilisateur (110) déterminé, via la liaison de communication sans fil, pour une commande basée sur les gestes de l'appareil utilisateur (110) déterminé, en particulier d'une application logicielle de l'appareil utilisateur (110) déterminé.

13. Station d'accueil (100) selon l'une des revendications précédentes, dans laquelle
- le microphone est aménagé pour détecter des données audio relatives à une instruction prononcée par un utilisateur ; et
- le module de commande (200) est aménagé pour envoyer les données audio, ou des données de commande déduites de celles-ci, à l'appareil utilisateur (110) déterminé, via la liaison de communication sans fil, pour une commande vocale de l'appareil utilisateur (110) déterminé, en particulier d'une application logicielle de l'appareil utilisateur (110) déterminé ; et/ou
- le module de commande (200) est aménagé pour commander une émission imagée sur une unité d'affichage (111) de l'appareil utilisateur déterminé (110) en fonction des données audio.

14. Station d'accueil (100) selon l'une des revendications précédentes, dans laquelle le module de commande (200) est aménagé,
- pour déterminer si un utilisateur se trouve ou non dans l'environnement de la station d'accueil (100) sur la base de données de capteur d'un capteur (103, 202) de la station d'accueil (100) et/ou d'un capteur de l'appareil utilisateur déterminé (110) qui se trouve dans le support (105) de la station d'accueil (100) ; et
- pour induire le fait qu'une commande, en particulier une commande vocale et/ou à distance, d'une fonction de la station d'accueil (100), de l'appareil utilisateur déterminé (110) et/ou d'un autre appareil, en particulier d'une cuisinière et/ou d'un four, soit empêchée en utilisant la station d'accueil (100) lorsqu'il est déterminé qu'aucun utilisateur ne se trouve dans l'environnement de la station d'accueil (100).

15. Procédé (410, 500) de pose d'un appareil utilisateur électronique (110) sur une station d'accueil (100) ; dans lequel le procédé (410, 500) comprend les étapes suivantes,
- détermination (411, 501), sur la base de données de capteur d'occupation d'un capteur d'occupation (101) de la station d'accueil (100), de ce qu'un appareil utilisateur (110) se trouve dans un support (105) de la station d'accueil (100) ;
- émission (502) d'au moins une balise (312) depuis la station d'accueil (100), et en réaction, réception de plusieurs signaux de réponse (311) de plusieurs appareils d'utilisateur (110, 310) dans un environnement de la station d'accueil ;
- détermination, sur la base des plusieurs signaux de réponse (311), duquel des plusieurs appareils utilisateur (110, 310) se trouve dans le support (105) de la station d'accueil (100) ; et
- mise en place (413, 504) d'une liaison de communication sans fil entre la station d'accueil (100) et l'appareil utilisateur déterminé (110) lorsqu'il a été déterminé que l'appareil utilisateur déterminé (110, 310) se trouve dans le support (105) de la station d'accueil (100).
